(19) Europäisches Patentamt
European Patent Office
Office européen des brevets

(11) EP 3 621 134 A1

(12) **EUROPEAN PATENT APPLICATION**
published in accordance with Art. 153(4) EPC

(43) Date of publication:
**11.03.2020 Bulletin 2020/11**

(21) Application number: **18793856.8**

(22) Date of filing: **27.04.2018**

(51) Int Cl.:
***H01M 4/60*** (2006.01) ***H01M 10/052*** (2010.01)

(86) International application number:
**PCT/JP2018/017264**

(87) International publication number:
**WO 2018/203535 (08.11.2018 Gazette 2018/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.05.2017 US 201762492657 P**

(71) Applicants:
- **Murata Manufacturing Co., Ltd.**
  **Nagaokakyo-shi, Kyoto 617-8555 (JP)**
- **Hydro-Québec**
  **Montréal, QC H2Z 1A4 (CA)**

(72) Inventors:
- **ASAKAWA, Yuichiro**
  **Nagaokakyo-shi**
  **Kyoto 617-8555 (JP)**
- **UESAKA Shinichi**
  **Nagaokakyo-shi**
  **Kyoto 617-8555 (JP)**
- **LAFLEUR-LAMBERT Antoine**
  **Varennes,**
  **Quebec, J3X 1S1 (CA)**
- **ZAGHIB Karim**
  **Varennes,**
  **Quebec, J3X 1S1 (CA)**

(74) Representative: **Witte, Weller & Partner**
**Patentanwälte mbB**
**Postfach 10 54 62**
**70047 Stuttgart (DE)**

# (54) CYCLIC COMPOUND, NEGATIVE ELECTRODE FOR LITHIUM-ION SECONDARY BATTERY, AND LITHIUM-ION SECONDARY BATTERY

(57) A lithium ion secondary battery includes a cathode, an anode, and an electrolytic solution. The anode contains a cyclic compound. The cyclic compound contains one or more of a first cyclic compound, a second cyclic compound, a third cyclic compound, a fourth cyclic compound, a fifth cyclic compound, and a sixth cyclic compound.

[ FIG. 1 ]

FIG. 1

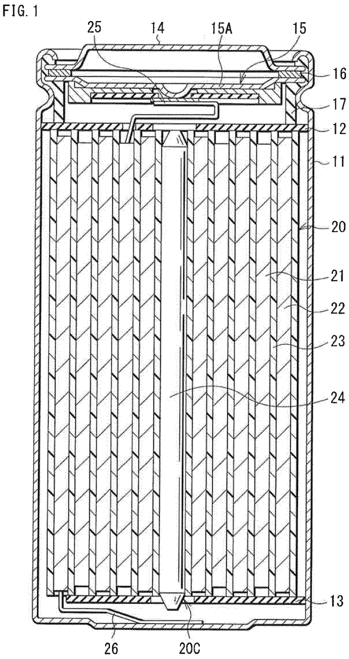


EP 3 621 134 A1

## Description

### Technical Field

The present technology relates to a cyclic compound having a cyclic structure, an anode, for a lithium ion secondary battery, that uses the cyclic compound, and a lithium ion secondary battery provided with the anode for a lithium ion secondary battery.

### Background Art

As a result of widespread use of various electronic apparatuses, development of a lithium ion secondary battery, as a power source, which is small in size, light in weight, and capable of obtaining a high energy density is being promoted.
A lithium ion secondary battery includes an electrolytic solution together with a cathode and an anode. The anode contains an anode active material, etc. which are related to a charge-discharge reaction. Since a configuration of the anode greatly influences a battery characteristic, various considerations have been given to the configuration of the anode.
Specifically, in order to suppress deterioration of a battery characteristic at a time of high temperature storage, an anode contains cyclic polyether, cryptand, etc. (for example, see PTL 1). As the cyclic polyether, 4,10-diaza-12-crown 4-ether or the like is used.

### Citation List

### Patent Literature

PTL 1: Japanese Unexamined Patent Application Publication No. 2015-118782

### Summary of the Invention

An electronic apparatus on which a lithium ion secondary battery is to be mounted is increasingly gaining higher performance and more functions. For this reason, frequency of use of the electronic apparatus is increasing, and a usage environment of the electronic apparatus is expanding. Therefore, there is still room for improvement in a battery characteristic of the lithium ion secondary battery.
The present technology has been made in view of the above problem, and an object thereof is to provide a cyclic compound, an anode for a lithium ion secondary battery, and a lithium ion secondary battery that are capable of obtaining a superior battery characteristic.
A cyclic compound according to one embodiment of the present technology includes one or more of a first cyclic compound represented by a formula (1), a second cyclic compound represented by a formula (2), a third cyclic compound represented by a formula (3), a fourth cyclic compound represented by a formula (4), a fifth cyclic compound represented by a formula (5), and a sixth cyclic compound represented by a formula (6).

[Chem. 1]

Chem. 1

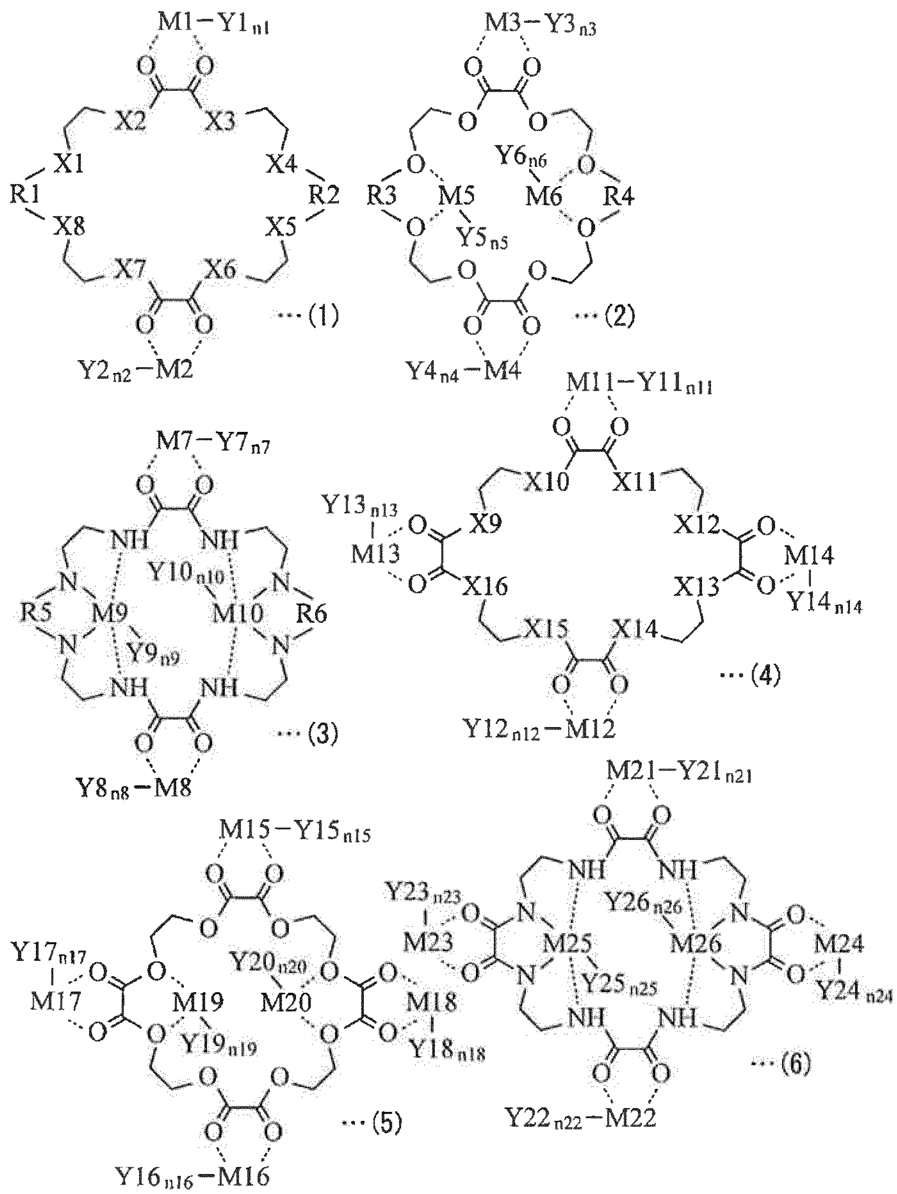

… (1) … (2) … (3) … (4) … (5) … (6)

(Each of X1 to X16 is one of an oxo group (-O-) and an imino group (-NH-). Each of R1 to R6 is one of an ethylene group ($-CH_2-CH_2-$) and a dicarbonyl group (-C(=O)-C(=O)-). Each of M1 to M26 is a metal element. Each of Y1 to Y26 is a halogen element. Each of n1 to n26 is an integer.)

An anode for a lithium ion secondary battery according to one embodiment of the present technology contains a cyclic compound. The cyclic compound has a configuration similar to that of the cyclic compound according to one embodiment of the present technology described above.

A lithium ion secondary battery according to one embodiment of the present technology includes a cathode, an anode, and an electrolytic solution. The anode has a configuration similar to that of the anode for a lithium ion secondary battery according to one embodiment of the present technology described above.

According to the cyclic compound, the anode for a lithium ion secondary battery, or the lithium ion secondary battery of the present technology, since the cyclic compound contains one or more of the first cyclic compound, the second cyclic compound, the third cyclic compound, the fourth cyclic compound, the fifth cyclic compound, and the sixth cyclic compound, it is possible to obtain a superior battery characteristic.

It is to be noted that effects of the present technology are not necessarily limited to the effects described here,

and may be any of a series of effects related to the present technology which will be described later.

## Brief Description of the Drawings

[FIG. 1] FIG. 1 is a cross-sectional view of a configuration of a lithium ion secondary battery (cylindrical type) according to an embodiment of the present technology.
[FIG. 2] FIG. 2 is an enlarged cross-sectional view of a configuration of a main part of the lithium ion secondary battery illustrated in FIG. 1.
[FIG. 3] FIG. 3 is a perspective view of a configuration of another lithium ion secondary battery (laminated film type) according to an embodiment of the present technology.
[FIG. 4] FIG. 4 is an enlarged cross-sectional view of a configuration of a main part of the lithium ion secondary battery illustrated in FIG. 3.
[FIG. 5] FIG. 5 is a cross-sectional view of a configuration of a test secondary battery (coin type).

## Modes for Carrying Out the Invention

An embodiment of the present technology will be described below in detail with reference to the drawings. It is to be noted that the description is given in the following order.

1. Cyclic Compound
    1-1. Configuration
    1-2. Manufacturing Method
    1-3. Workings and Effects
2. Lithium Ion Secondary Battery and Anode for Lithium Ion Secondary Battery (Cylindrical Type)
    2-1. Configuration
    2-2. Operation
    2-3. Manufacturing Method
    2-4. Workings and Effects
3. Lithium Ion Secondary Battery and Anode for Lithium Ion Secondary Battery (Laminated Film Type)
    3-1. Configuration
    3-2. Operation
    3-3. Manufacturing Method
    3-4. Workings and Effects
4. Applications of Cyclic Compound
5. Applications of Lithium Ion Secondary Battery and Anode for Lithium Ion Secondary Battery

<1. Cyclic Compound>

First, description is given of a cyclic compound according to an embodiment of the present technology (which will be hereinafter simply referred to as a "cyclic compound".)
The cyclic compound described here is a compound having a particular cyclic structure, as will be described later. Since an application of the cyclic compound is not particularly limited, the cyclic compound is usable in various applications. One example of the application of the cyclic compound will be described later.

<1-1. Configuration>

The cyclic compound contains one or more of a first cyclic compound represented by a formula (1), a second cyclic compound represented by a formula (2), a third cyclic compound represented by a formula (3), a fourth cyclic compound represented by a formula (4), a fifth cyclic compound represented by a formula (5), and a sixth cyclic compound represented by a formula (6). It is to be noted that a type of the first cyclic compound may be only one type or two or

more types. That its type may be one type or two or more types is similarly applicable to each of the second cyclic compound, the third cyclic compound, the fourth cyclic compound, the fifth cyclic compound, and the sixth cyclic compound.

[Chem. 2]

Chem. 2

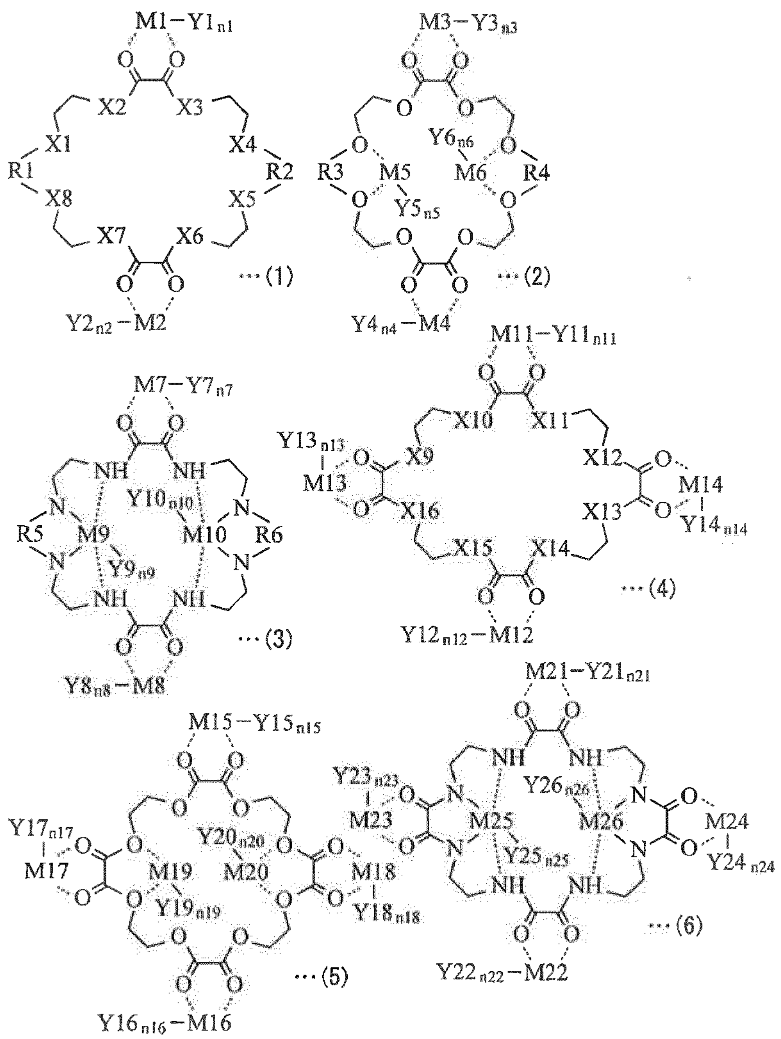

…(1) …(2) …(3) …(4) …(5) …(6)

(Each of X1 to X16 is one of an oxo group (-O-) and an imino group (-NH-). Each of R1 to R6 is one of an ethylene group ($-CH_2-CH_2-$) and a dicarbonyl group (-C(=O)-C(=O)-). Each of M1 to M26 is a metal element. Each of Y1 to Y26 is a halogen element. Each of n1 to n26 is an integer.)

The cyclic compound has a cyclic structure in which two or more dicarbonyl groups are included. More specifically, the cyclic compound has a cyclic skeleton represented by each of the formulae (1) to (6). It is to be noted that, in each of the formulae (1) to (6), a solid line indicates a covalent bond and a dashed line indicates a coordinate bond. This is similarly applicable to the below.

Metal atoms (M1 to M26) are introduced into these cyclic skeletons by utilizing coordinate bonding and covalent bonding. Specifically, in the cyclic skeleton in each of the formula (1) and the formula (4), the metal atoms (M1, M2, and M11 to M14) are introduced into outer side of the cyclic skeleton by utilizing coordinate bonding. Further, in the cyclic skeleton in each of the formula (2), the formula (3), the formula (5), and the formula (6), the metal atoms (M3, M4, M7, M8, M15 to M18, and M21 to M24) are introduced into outer side of the cyclic skeleton by utilizing coordinate bonding, and the metal atoms (M5, M6, M9, M10, M19, M20, M25, and M26) are introduced into inner side of the cyclic skeleton by utilizing coordinate bonding and covalent bonding.

In other words, each of the first cyclic compound, the second cyclic compound, the third cyclic compound, the

fourth cyclic compound, the fifth cyclic compound, and the sixth cyclic compound is an organic-inorganic hybrid compound in which an inorganic part (a metal compound) is introduced into an organic part (the cyclic skeleton). It is to be noted that description will be given later of a detailed configuration of each of the first cyclic compound, the second cyclic compound, the third cyclic compound, the fourth cyclic compound, the fifth cyclic compound, and the sixth cyclic compound.

The cyclic compound has an advantage described below.

Firstly, the cyclic compound is capable of smoothly inserting and extracting a substance by utilizing an internal space (a coordination field) of the cyclic skeleton. This makes it possible for the cyclic compound to serve as an active material that inserts and extracts an electrode reaction substance, as with a carbon material, etc. which will be described later, for example, in a case where the cyclic compound is used as an electrochemical device. The electrode reaction substance is a substance to be used in an electrode reaction. For example, in a case where the electrochemical device is a lithium ion secondary battery, the electrode reaction substance is lithium.

Secondly, the cyclic compound is able to extend and contract like a spring in accordance with external force by utilizing an extension-contraction characteristic of the cyclic skeleton. The cyclic compound therefore has a superior extension-contraction characteristic. Accordingly, for example, in a case where the cyclic compound is used in the electrochemical device, stress (an expansion and contraction phenomenon) generated inside the electrochemical device is made more moderate by the cyclic compound, which makes it more difficult for the electrochemical device to expand and contract.

Thirdly, in the cyclic compound, the metal atoms (M1 to M26) are introduced into the cyclic skeleton by utilizing coordinate bonding and covalent bonding. Therefore, for example, in the case where the cyclic compound is used in an electrochemical device, it is easier for the cyclic compound to insert and extract the electrode reaction substance by using an electrochemical capacity of the metal atoms, and a potential of an electrode including the cyclic compound is made higher by utilizing a coordination potential of the metal atom (the metal species), compared with a case where no metal atom is introduced into the cyclic skeleton.

[First Cyclic Compound]

As represented by the formula (1), the first cyclic compound is a compound that has a cyclic skeleton containing two or more dicarbonyl groups and has metal atoms (M1 and M2) introduced into outer side of the cyclic skeleton by utilizing coordinate bonding.

In the first cyclic compound, the metal atom (M1) is coordinated to two oxygen atoms that form a dicarbonyl group, and the metal atom (M2) is coordinated to two oxygen atoms that form another dicarbonyl group opposed to the foregoing dicarbonyl group. It is to be noted that n1-number of halogen atoms (Y1) are covalently bonded to the metal atom (M1), and n2-number of halogen atoms (Y2) are covalently bonded to the metal atom (M2).

(X1 to X8)

As described above, each of X1 to X8 is not particularly limited as long as it is one of an oxo group and an imino group. That is, all of X1 to X8 may be oxo groups, all of X1 to X8 may be imino groups, or a portion of X1 to X8 may be oxo groups and the rest may be imino groups.

In particular, it is preferable that all of X1 to X8 be oxo groups or all of X1 to X8 be imino groups. One reason for this is that it is easier for the first cyclic compound to extend and contract.

(R1 and R2)

As described above, each of R1 and R2 is not particularly limited as long as it is one of an ethylene group and a dicarbonyl group. That is, both of R1 and R2 may be ethylene groups, both of R1 and R2 may be dicarbonyl groups, or one of R1 and R2 may be an ethylene group and the other may be a dicarbonyl group. Accordingly, the first cyclic compound has two to four dicarbonyl groups.

(M1 and M2)

As described above, each of M1 and M2 is not particularly limited as long as it is a metal element. More specifically, each of M1 and M2 is not particularly limited as long as it is a metal atom (a metal element) capable of being coordinated to two oxygen atoms as described above. A type of M1 and a type of M2 may be the same as each other or different from each other, for example.

Specifically, examples of the metal element include tin (Sn), titanium (Ti), silicon (Si), copper (Cu), manganese (Mn), iron (Fe), niobium (Nb), nickel (Ni), cobalt (Co), aluminum (Al), zirconium (Zr), etc. One reason for this is that it is

easier for the metal atoms (M1 and M2) to be coordinated to the cyclic skeleton. This makes it easier for the first cyclic compound to extend and contract, and allows a potential of an electrode including the first cyclic compound to be sufficiently high.

(Y1 and Y2)

As described above, each of Y1 and Y2 is not particularly limited as long as it is a halogen element. A type of Y1 and a type of Y2 may be the same as each other or different from each other, for example. Further, types of the n1-number of Y1s may be, for example, only one type or two or more types. That the type may be one type or two or more types as described above also similarly applies to types of the n2-number of Y2s.

Specifically, examples of each of Y1 and Y2 include fluorine (F), chlorine (Cl), bromine (Br), iodine (I), etc. One reason for this is that it is easier for the metal atoms (M1 and M2) to be coordinated to the cyclic skeleton. This makes it easier for the first cyclic compound to extend and contract, and allows the potential of the electrode including the first cyclic compound to be sufficiently high.

(n1, n2)

n1 is the number of Y1 bonded to M1. A value of n1 is determined in accordance with the type of M1. n2 is the number of Y2 bonded to M2. A value of n2 is determined in accordance with the type of Y2. The values of n1 and n2 may be the same as each other or different from each other, for example.

The value of n1 is not particularly limited as long as it is an integer determined in accordance with the type of M1 as described above; however, the value of n1 is, for example, 2 or 4. The value of n2 is not particularly limited as long as it is an integer determined in accordance with the type of M2 as described above; however, the value of n2 is, for example, 2 or 4.

[Second Cyclic Compound]

As represented by the formula (2), the second cyclic compound is a compound that has a cyclic oxygen skeleton containing two or more dicarbonyl groups and has metal atoms (M3 to M6) introduced into the cyclic oxygen skeleton by utilizing coordinate bonding. More specifically, the second cyclic compound is a compound that has the metal atoms (M3 and M4) introduced into outer side of the cyclic oxygen skeleton by utilizing coordinate bonding and has the metal atoms (M5 and M6) introduced into inner side of the cyclic oxygen skeleton by utilizing coordinate bonding.

In the second cyclic compound, the metal atom (M3) is coordinated to two oxygen atoms that form a dicarbonyl group, and the metal atom (M4) is coordinated to two oxygen atoms that form another dicarbonyl group opposed to the foregoing dicarbonyl group. It is to be noted that n3-number of halogen atoms (Y3) are covalently bonded to the metal atom (M3), and n4-number of halogen atoms (Y4) are covalently bonded to the metal atom (M4).

Further, in the second cyclic compound, the metal atom (M5) is coordinated to two oxygen atoms positioned on respective sides of R3, and the metal atom (M6) is coordinated to two oxygen atoms positioned on respective sides of R4. It is to be noted that n5-number of halogen atoms (Y5) are covalently bonded to the metal atom (M5), and n6-number of halogen atoms (Y6) are covalently bonded to the metal atom (M6).

(R3 and R4)

Details related to each of R3 and R4 are similar to those related to each of R1 and R2. That is, the second cyclic compound has two to four dicarbonyl groups.

(M3 to M6)

Details related to each of M3 to M6 are similar to those related to each of M1 and M2. That is, each of M3 to M6 is not particularly limited as long as it is a metal atom (a metal element) capable of being coordinated to two oxygen atoms as described above. Types of M3 to M6 may be the same as each other or different from each other, for example. It goes without saying that only a portion of M3 to M6 may be of the same type.

(Y3 to Y6)

Details related to each of Y3 to Y6 are similar to those related to each of Y1 and Y2. Types of Y3 to Y6 may be the same as each other or different from each other, for example. It goes without saying that only a portion of Y3 to Y6 may be of the same type. Types of the n3-number of Y3s may be, for example, only one type or two or more types.

That only one type or two or more types may be included as described above also similarly applies to types of the n4-number of Y4s, types of the n5-number of Y5s, and types of the n6-number of Y6s.

(n3 to n6)

Details related to each of n3 to n6 are similar to those related to each of n1 and n2. A value of n3 is determined in accordance with the type of M3. A value of n4 is determined in accordance with the type of M4. A value of n5 is determined in accordance with the type of M5. A value of n6 is determined in accordance with the type of M6. The values of n3 to n6 are not particularly limited as long as they are integers determined in accordance with the types of M3 to M6, respectively; however, the value of each of n3 to n6 is, for example, 2 or 4.

[Third Cyclic Compound]

As represented by the formula (3), the third cyclic compound is a compound that has a cyclic nitrogen skeleton containing two or more dicarbonyl groups and has metal atoms (M7 to M10) introduced into the cyclic nitrogen skeleton by utilizing coordinate bonding and covalent bondings. More specifically, the third cyclic compound is a compound that has the metal atoms (M7 and M8) introduced into outer side of the cyclic nitrogen skeleton by utilizing coordinate bonding and has the metal atoms (M9 and M10) introduced into inner side of the cyclic nitrogen skeleton by utilizing coordinate bonding and covalent bonding.

In the third cyclic compound, the metal atom (M7) is coordinated to two oxygen atoms that form a dicarbonyl group, and the metal atom (M8) is coordinated to two oxygen atoms that form another dicarbonyl group opposed to the foregoing dicarbonyl group. It is to be noted that n7-number of halogen atoms (Y7) are covalently bonded to the metal atom (M7), and n8-number of halogen atoms (Y8) are covalently bonded to the metal atom (M8).

Further, in the third cyclic compound, the metal atom (M9) is covalently bonded to two nitrogen atoms positioned on respective sides of R5, the metal atom (M9) is coordinated to another two nitrogen atoms, the metal atom (M10) is covalently bonded to two nitrogen atoms positioned on respective sides of R6, and the metal atom (M10) is coordinated to another two nitrogen atoms. It is to be noted that n9-number of halogen atoms (Y9) are covalently bonded to the metal atom (M9), and n10-number of halogen atoms (Y10) are covalently bonded to the metal atom (M10).

(R5 and R6)

Details related to each of R5 and R6 are similar to those related to each of R1 and R2. That is, the third cyclic compound has two to four dicarbonyl groups.

(M7 to M10)

Details related to each of M7 to M10 are similar to those related to each of M1 and M2. That is, each of M7 and M8 is not particularly limited as long as it is a metal atom (a metal element) capable of being coordinated to two oxygen atoms as described above. Each of M9 and M10 is not particularly limited as long as it is a metal atom (a metal element) capable of being covalently bonded to two nitrogen atoms and coordinated to another two nitrogen atoms as described above. Types of M7 to M10 may be the same as each other or different from each other, for example. It goes without saying that only a portion of M7 to M10 may be of the same type.

(Y7 to Y10)

Details related to each of Y7 to Y10 are similar to those related to each of Y1 and Y2. Types of Y7 to Y10 may be the same as each other or different from each other, for example. It goes without saying that only a portion of Y7 to Y10 may be of the same type. Types of the n7-number of Y7s may be, for example, only one type or two or more types. That only one type or two or more types may be included as described above also similarly applies to types of the n8-number of Y8s, types of the n9-number of Y9s, and types of the n10-number of Y10s.

(n7 to n10)

Details related to each of n7 to n10 are similar to those related to each of n1 and n2. A value of n7 is determined in accordance with the type of M7. A value of n8 is determined in accordance with the type of M8. A value of n9 is determined in accordance with the type of M9. A value of n10 is determined in accordance with the type of M10. The values of n7 to n10 are not particularly limited as long as they are integers determined in accordance with the types of M7 to M10, respectively; however, the value of each of n7 to n10 is, for example, 2 or 4.

[Fourth Cyclic Compound]

As represented by the formula (4), the fourth cyclic compound is a compound that has a cyclic skeleton containing four dicarbonyl groups and has metal atoms (M11 to M14) introduced into the cyclic skeleton by utilizing coordinate bonding. More specifically, the fourth cyclic compound is a compound that has the metal atoms (M11 and M14) introduced into outer side of the cyclic skeleton by utilizing coordinate bonding.

In the fourth cyclic compound, the metal atom (M11) is coordinated to two oxygen atoms that form a dicarbonyl group, and the metal atom (M12) is coordinated to two oxygen atoms that form another dicarbonyl group opposed to the foregoing dicarbonyl group. It is to be noted that n11-number of halogen atoms (Y11) are covalently bonded to the metal atom (M11), and n12-number of halogen atoms (Y12) are covalently bonded to the metal atom (M12).

Further, in the third cyclic compound, the metal atom (M13) is coordinated to two oxygen atoms that form a dicarbonyl group different from the foregoing four dicarbonyl groups, and the metal atom (M14) is coordinated to two oxygen atoms that form another dicarbonyl group opposed to the foregoing dicarbonyl group. It is to be noted that n13-number of halogen atoms (Y13) are covalently bonded to the metal atom (M13), and n14-number of halogen atoms (Y14) are covalently bonded to the metal atom (M14).

(X9 to X16)

Details related to each of X9 to X16 are similar to those related to each of X1 to X8. That is, it is preferable that all of X9 to X16 be oxo groups or all of X9 to X16 be imino groups. One reason for this is that it is easier for the fourth cyclic compound to extend and contract.

(M11 to M14)

Details related to each of M11 to M14 are similar to those related to each of M1 and M2. That is, each of M11 to M14 is not particularly limited as long as it is a metal atom (a metal element) capable of being coordinated to two oxygen atoms as described above. Types of M11 to M14 may be the same as each other or different from each other, for example. It goes without saying that only a portion of M11 to M14 may be of the same type.

(Y11 to Y14)

Details related to each of Y11 to Y14 are similar to those related to each of Y1 and Y2. Types of Y11 to Y14 may be the same as each other or different from each other, for example. It goes without saying that only a portion of Y11 to Y14 may be of the same type. Types of the n11-number of Y11s may be, for example, only one type or two or more types. That only one type or two or more types may be included as described above also similarly applies to types of the n12-number of Y12s, types of the n13-number of Y13s, and types of the n14-number of Y14s.

(n11 to n14)

Details related to each of n11 to n14 are similar to those related to each of n1 and n2. A value of n11 is determined in accordance with the type of M11, and a value of n12 is determined in accordance with the type of M12. A value of n13 is determined in accordance with the type of M13, and a value of n14 is determined in accordance with the type of M14. The values of n11 to n14 are not particularly limited as long as they are integers determined in accordance with the types of M11 to M14, respectively; however, the value of each of n11 to n14 is, for example, 2 or 4.

[Fifth Cyclic Compound]

As represented by the formula (5), the fifth cyclic compound is a compound that has a cyclic oxygen skeleton containing four dicarbonyl groups and has metal atoms (M15 to M20) introduced into the cyclic oxygen skeleton by utilizing coordinate bonding. More specifically, the fifth cyclic compound is a compound that has the metal atoms (M15 to M18) introduced into outer side of the cyclic oxygen skeleton by utilizing coordinate bonding and has the metal atoms (M19 and M20) introduced into inner side of the cyclic oxygen skeleton by utilizing coordinate bonding.

In the fifth cyclic compound, the metal atom (M15) is coordinated to two oxygen atoms that form a dicarbonyl group, and the metal atom (M16) is coordinated to two oxygen atoms that form another dicarbonyl group opposed to the foregoing dicarbonyl group. It is to be noted that n15-number of halogen atoms (Y15) are covalently bonded to the metal atom (M15), and n16-number of halogen atoms (Y16) are covalently bonded to the metal atom (M16).

Further, in the fifth cyclic compound, the metal atom (M17) is covalently bonded to two oxygen atoms that form a dicarbonyl group different from the foregoing four dicarbonyl groups, and the metal atom (M18) is coordinated to two

oxygen atoms that form another dicarbonyl group opposed to the foregoing dicarbonyl group. It is to be noted that n17-number of halogen atoms (Y17) are covalently bonded to the metal atom (M17), and n18-number of halogen atoms (Y18) are covalently bonded to the metal atom (M18).

Further, in the fifth cyclic compound, the metal atom (M19) is coordinated to two oxygen atoms positioned on respective sides of a dicarbonyl group, and the metal atom (M20) is coordinated to two oxygen atoms positioned on respective sides of another dicarbonyl group opposed to the foregoing dicarbonyl group. It is to be noted that n19-number of halogen atoms (Y19) are covalently bonded to the metal atom (M19), and n20-number of halogen atoms (Y20) are covalently bonded to the metal atom (M20).

(M15 to M20)

Details related to each of M15 to M20 are similar to those related to each of M1 and M2. That is, each of M15 to M20 is not particularly limited as long as it is a metal atom (a metal element) capable of being coordinated to two oxygen atoms as described above. Types of M15 to M20 may be the same as each other or different from each other, for example. It goes without saying that only a portion of M15 to M20 may be of the same type.

(Y15 to Y20)

Details related to each of Y15 to Y20 are similar to those related to each of Y1 and Y2. Types of Y15 to Y20 may be the same as each other or different from each other, for example. It goes without saying that only a portion of Y15 to Y20 may be of the same type. Types of the n15-number of Y15s may be, for example, only one type or two or more types. That only one type or two or more types may be included as described above also similarly applies to types of the n16-number of Y16s, types of the n17-number of Y17s, types of the n18-number of Y18s, and types of the n20-number of Y20s.

(n15 to n20)

Details related to each of n15 to n20 are similar to those related to each of n1 and n2. A value of n15 is determined in accordance with the type of M15, and a value of n16 is determined in accordance with the type of M16. A value of n17 is determined in accordance with the type of M17, and a value of n18 is determined in accordance with the type of M18. A value of n19 is determined in accordance with the type of M19, and a value of n20 is determined in accordance with the type of M20. The values of n15 to n20 are not particularly limited as long as they are integers determined in accordance with the types of M15 to M20, respectively; however, the value of each of n15 to n20 is, for example, 2 or 4.

[Sixth Cyclic Compound]

As represented by the formula (6), the sixth cyclic compound is a compound that has a cyclic nitrogen skeleton containing four dicarbonyl groups and has metal atoms (M21 to M26) introduced into the cyclic nitrogen skeleton by utilizing coordinate bonding and covalent bonding. More specifically, the sixth cyclic compound is a compound that has the metal atoms (M21 to M24) introduced into outer side of the cyclic nitrogen skeleton by utilizing coordinate bonding, and has the metal atoms (M25 and M26) introduced into inner side of the cyclic nitrogen skeleton by utilizing coordinate bonding and covalent bonding.

In the sixth cyclic compound, the metal atom (M21) is coordinated to two oxygen atoms that form a dicarbonyl group, and the metal atom (M22) is coordinated to two oxygen atoms that form another dicarbonyl group opposed to the foregoing dicarbonyl group. It is to be noted that n21-number of halogen atoms (Y21) are covalently bonded to the metal atom (M21), and n22-number of halogen atoms (Y22) are covalently bonded to the metal atom (M22).

Further, in the sixth cyclic compound, the metal atom (M23) is covalently bonded to two oxygen atoms that form a dicarbonyl group different from the foregoing four dicarbonyl groups, and the metal atom (M24) is coordinated to two oxygen atoms that form another dicarbonyl group opposed to the foregoing dicarbonyl group. It is to be noted that n23-number of halogen atoms (Y23) are covalently bonded to the metal atom (M23), and n24-numbcr of halogen atoms (Y24) are covalently bonded to the metal atom (M24).

Further, in the sixth cyclic compound, the metal atom (M25) is covalenty bonded to two nitrogen atoms positioned on respective sides of a dicarbonyl group, the metal atom (M25) is coordinated to another two nitrogen atoms, the metal atom (M26) is covalently bonded to two nitrogen atoms positioned on respective sides of another dicarbonyl group opposed to the foregoing dicarbonyl group, and the metal atom (M26) is coordinated to another two nitrogen atoms. It is to be noted that n25-number of halogen atoms (Y25) are covalently bonded to the metal atom (M25), and n26-number of halogen atoms (Y26) are covalently bonded to the metal atom (M26).

(M21 to M26)

Details related to each of M21 to M26 are similar to those related to each of M1 and M2. That is, each of M21 to M24 is not particularly limited as long as it is a metal atom (a metal element) capable of being coordinated to two oxygen atoms as described above. Each of M25 and M26 is not particularly limited as long as it is a metal atom (a metal element) capable of being covalently bonded to two nitrogen atoms and coordinated to another two nitrogen atoms as described above. Types of M21 to M26 may be the same as each other or different from each other, for example. It goes without saying that only a portion of M21 to M26 may be of the same type.

(Y21 to Y26)

Details related to each of Y21 to Y26 are similar to those related to each of Y1 and Y2. Types of Y21 to Y26 may be the same as each other or different from each other, for example. It goes without saying that only a portion of Y21 to Y26 may be of the same type. Types of the n21-number of Y21s may be, for example, only one type or two or more types. That only one type or two or more types may be included as described above also similarly applies to types of the n22-number of Y22s, types of the n23-number of Y23s, types of the n24-number of Y24s, types of the n25-number of Y25s, and types of the n26-number of Y26s.

(n21 to n26)

Details related to each of n21 to n26 are similar to those related to each of n1 and n2. A value of n21 is determined in accordance with the type of M21, and a value of n22 is determined in accordance with the type of M22. A value of n23 is determined in accordance with the type of M23, and a value of n24 is determined in accordance with the type of M24. A value of n25 is determined in accordance with the type of M25, and a value of n26 is determined in accordance with the type of M26. The values of n21 to n26 are not particularly limited as long as they are integers determined in accordance with the types of M21 to M26, respectively; however, the value of each of n21 to n26 is, for example, 2 or 4.

[Hydration]

It is to be noted that the first cyclic compound may be hydrated, for example. Specifically, since the metal atoms (M1 and M2) introduced into the outer side of the cyclic skeleton are hydrated, one or more water molecules ($H_2O$) may be attached to each of the metal atoms by utilizing electrostatic force, hydrogen bonding, etc.

That the cyclic compound may be hydrated similarly applies to each of the second cyclic compound, the third cyclic compound, the fourth cyclic compound, the fifth cyclic compound, and the sixth cyclic compound, for example. Specifically, in the second cyclic compound, for example, each of the metal atoms (M3 and M4) introduced into the outer side of the cyclic oxygen skeleton may be hydrated. In the third cyclic compound, for example, each of the metal atoms (M7 and M8) introduced into the outer side of the cyclic nitrogen skeleton may be hydrated. In the fourth cyclic compound, for example, each of the metal atoms (M11 to M14) introduced into the outer side of the cyclic skeleton may be hydrated. In the fifth cyclic compound, for example, each of the metal atoms (M15 to M18) introduced into the outer side of the cyclic oxygen skeleton may be hydrated. In the sixth cyclic compound, for example, each of the metal atoms (M21 to M24) introduced into the outer side of the cyclic nitrogen skeleton may be hydrated.

Number of water molecules attached to each of the metal atoms (M1 to M4, M7, M8, M11 to M18, and M21 to M24) is not particularly limited; however, the number of water molecules attached to each of the metal atoms (M1 to M4, M7, M8, M11 to M18, and M21 to M24) may be, for example, two.

[Suitable Cyclic Compounds]

In particular, it is preferable that the first cyclic compound be a compound represented by the following formula (7). It is preferable that the second cyclic compound be a compound represented by the following formula (8). It is preferable that the third cyclic compound be a compound represented by the following formula (9). One reason for this is that it is easier for each of the first cyclic compound, the second cyclic compound, and the third cyclic compound to extend and contract.

[Chem. 3]

Chem. 3

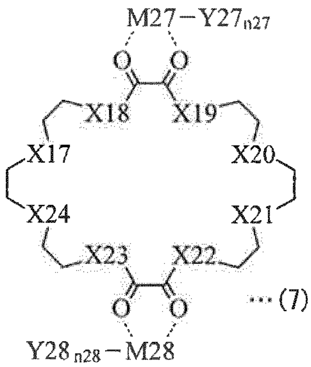

···(7)

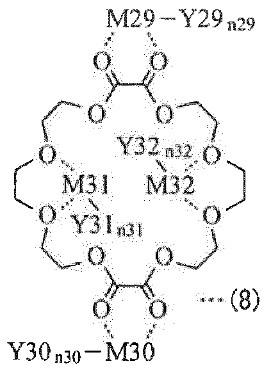

···(8)

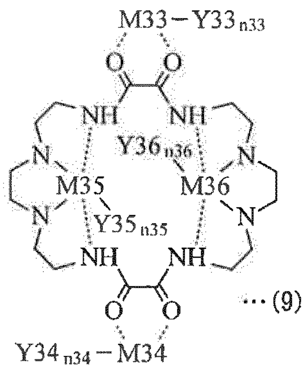

···(9)

(Each of X17 to X24 is one of an oxo group and an imino group. Each of M27 to M36 is a metal element. Each of Y27 to Y36 is a halogen element. Each of n27 to n36 is an integer.)

The compound represented by the formula (7) is a compound in which each of R1 and R2 is an ethylene group, of the first cyclic compound represented by the formula (1). Details related to each of X17 to X24, M27, M28, Y27, Y28, n27, and n28 are similar to those related to each of X1 to X8, M1, M2, Y1, Y2, n1, and n2, for example.

The compound represented by the formula (8) is a compound in which each of R3 and R4 is an ethylene group, of the second cyclic compound represented by the formula (2). Details related to each of M29 to M32, Y29 to Y32, and n29 to n32 are similar to those related to each of M3 to M6, Y3 to Y6, and n3 to n6, for example.

The compound represented by the formula (9) is a compound in which each of R5 and R6 is an ethylene group, of the third cyclic compound represented by the formula (3). Details related to each of M33 to M36, Y33 to Y36, and n33 to n36 are similar to those related to each of M7 to M10, Y7 to Y10, and n7 to n10, for example.

[Specific Examples of Cyclic Compounds]

Specific examples of the cyclic compounds are as follows. It is to be noted that a series of specific examples described below may be hydrated as described above, for example.

(First Cyclic Compound)

The first cyclic compound is, for example, a compound represented by each of the following formulae (1-1) to (1-24), etc. The compound represented by each of the formulae (1-1) to (1-12) is a compound in which all of X1 to X8 in the formula (1) are oxo groups, and the compound represented by each of the formulae (1-13) to (1-24) is a compound in which all of X1 to X8 in the formula (1) are imino groups.

It is to be noted that, in each of the formulae (1-1) to (1-11) and the formulae (1-13) to (1-23), for example, a case where each of Y1 and Y2 in the formula (1) is chlorine is represented. Each of Y1 and Y2 is, however, not limited to chlorine as described above, and therefore may be fluorine, bromine, or iodine. Specifically, for example, as represented by the formulae (1-12) and (1-24), each of Y1 and Y2 may be fluorine.

[Chem. 4]

Chem. 4

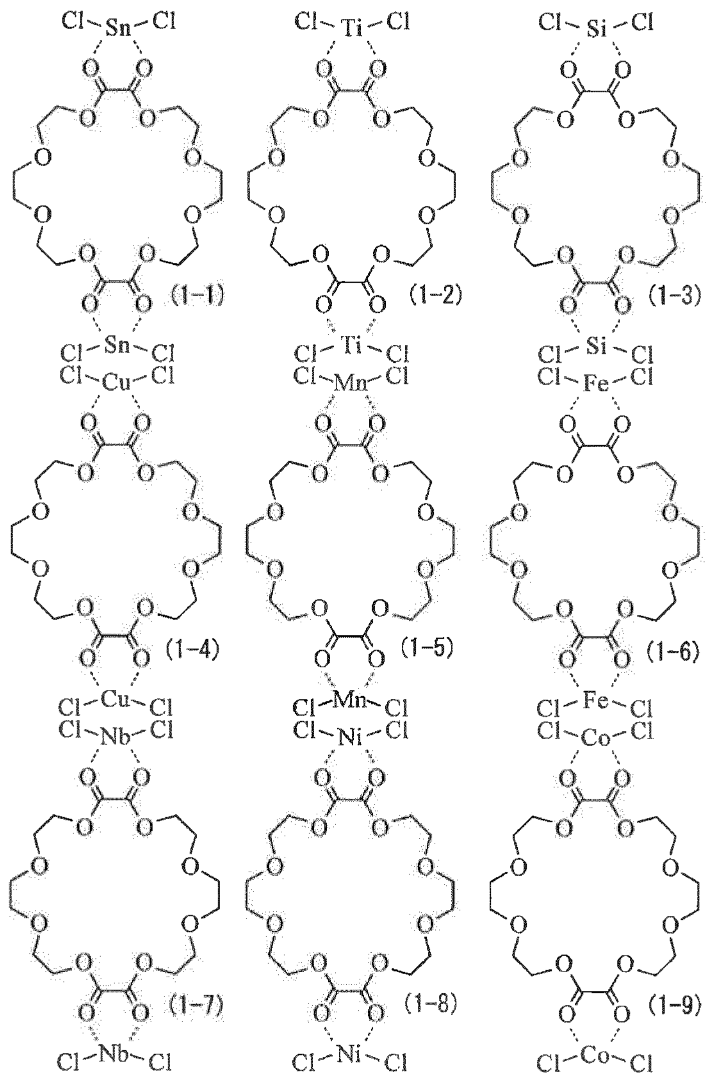

(1-1) (1-2) (1-3) (1-4) (1-5) (1-6) (1-7) (1-8) (1-9)

[Chem. 5]

Chem. 5

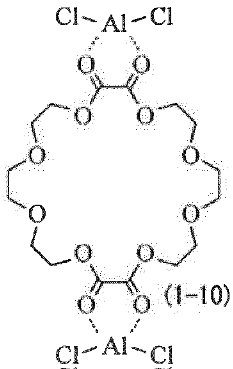
(1-10)

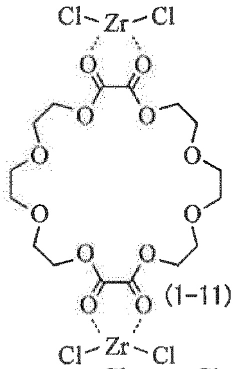
(1-11)

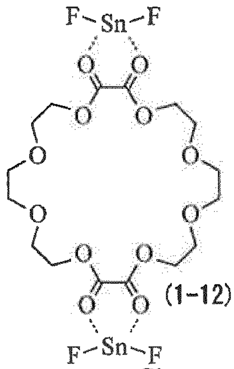
(1-12)

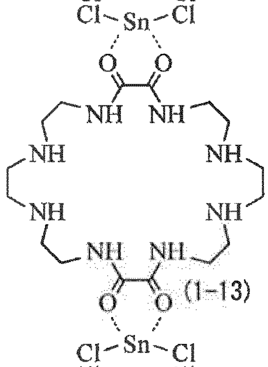
(1-13)

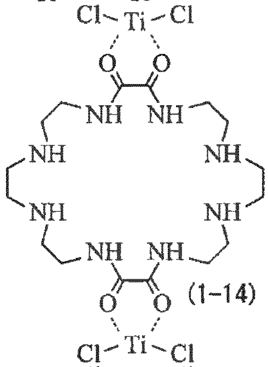
(1-14)

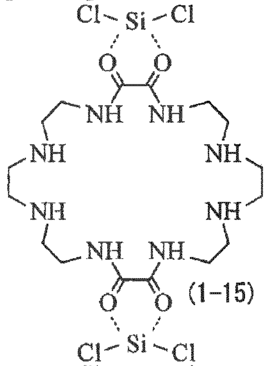
(1-15)

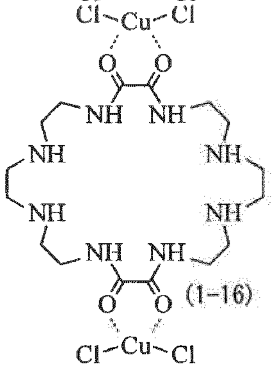
(1-16)

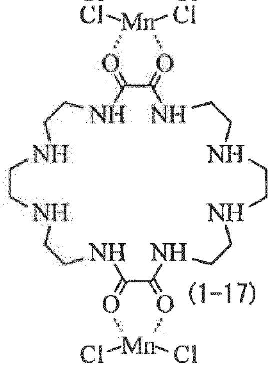
(1-17)

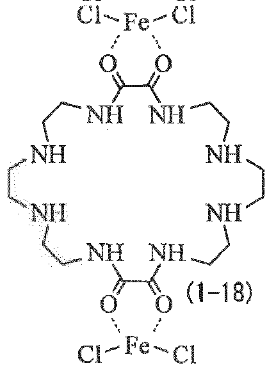
(1-18)

[Chem. 6]

Chem. 6

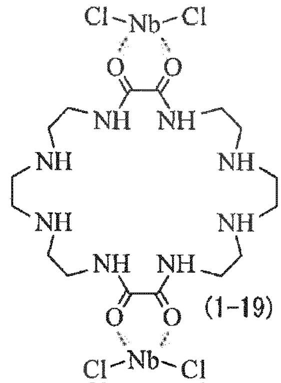
(1-19)

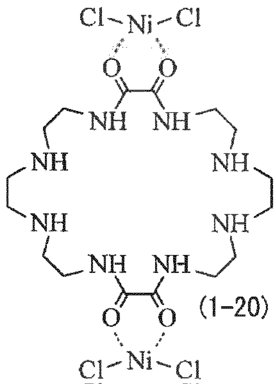
(1-20)

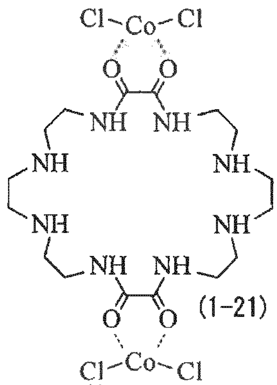
(1-21)

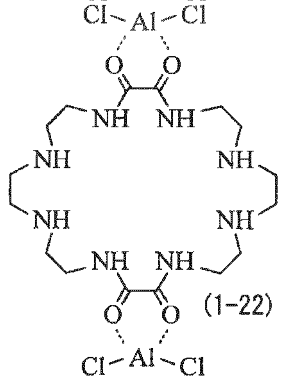
(1-22)

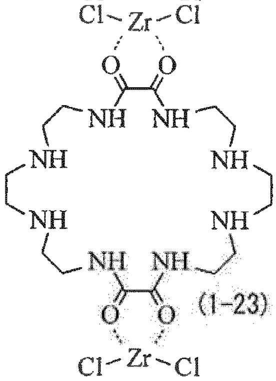
(1-23)

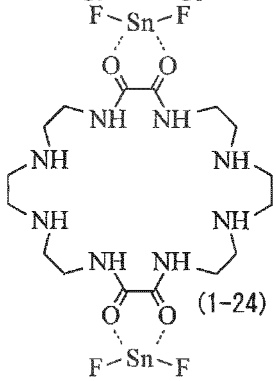
(1-24)

(Second Cyclic Compound)

The second cyclic compound is, for example, a compound represented by each of the following formulae (2-1) to (2-12), etc.

It is to be noted that, in each of the formulae (2-1) to (2-11), for example, a case where each of Y3 to Y6 in the formula (2) is chlorine is represented. Each of Y3 to Y6 is, however, not limited to chlorine as described above. Therefore, each of Y3 to Y6 may be fluorine as represented by the formula (2-12), for example.

Further, in each of the formulae (2-1) to (2-12), for example, a case where each of M5 and M6 in the formula (2) is tin is represented. Each of M5 and M6 is, however, not limited to tin as described above. Therefore, each of M5 and M6 may be any of titanium, silicon, copper, manganese, iron, niobium, nickel, cobalt, aluminum, and zirconium.

[Chem. 7]

Chem. 7

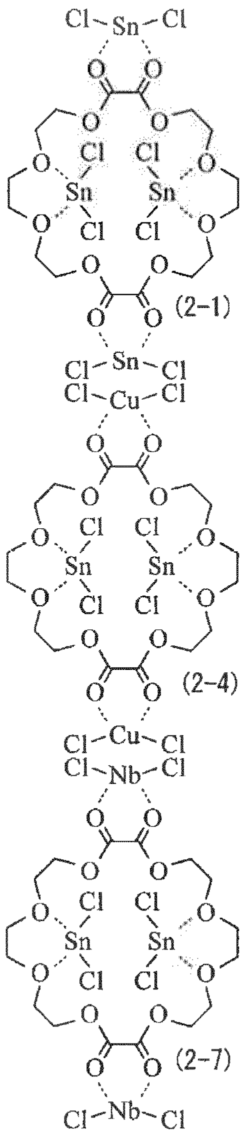

(2-1)

(2-4)

(2-7)

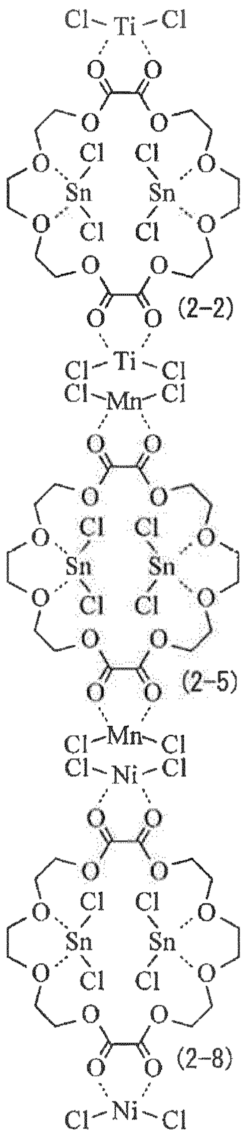

(2-2)

(2-5)

(2-8)

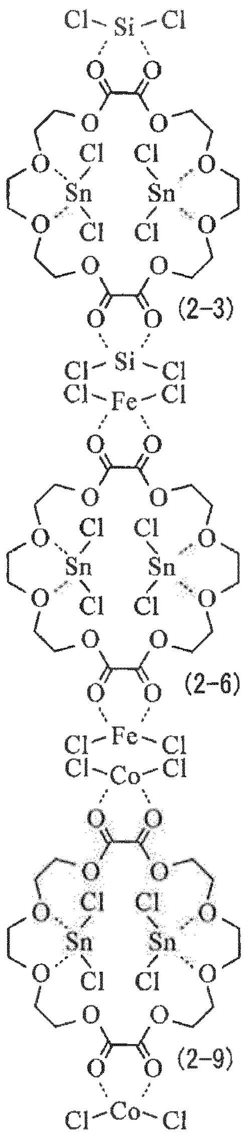

(2-3)

(2-6)

(2-9)

[Chem. 8]

Chem. 8

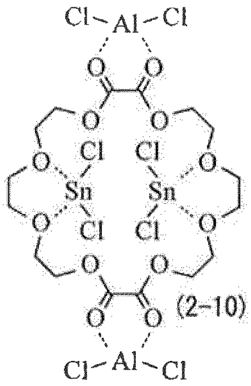
(2-10)

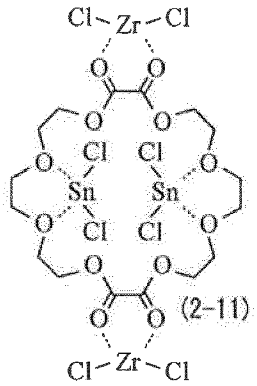
(2-11)

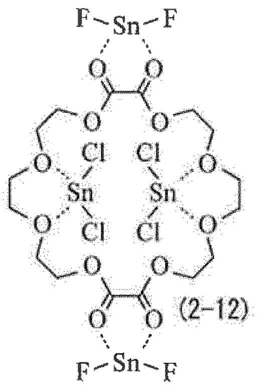
(2-12)

(Third Cyclic Compound)

The third cyclic compound is, for example, a compound represented by each of the following formulae (3-1) to (3-12), etc.

It is to be noted that, in each of the formulae (3-1) to (3-11), for example, a case where each of Y7 to Y10 in the formula (3) is chlorine is represented. Each of Y7 to Y10 is, however, not limited to chlorine as described above. Therefore, each of Y7 to Y10 may be fluorine as represented by the formula (3-12), for example.

Further, in each of the formulae (3-1) to (3-12), for example, a case where each of M9 and M10 in the formula (3) is tin is represented. Each of M9 and M10 is, however, not limited to tin as described above. Therefore, each of M9 and M10 may be any one of titanium, silicon, copper, manganese, iron, niobium, nickel, cobalt, aluminum, and zirconium.

[Chem. 9]

Chem. 9

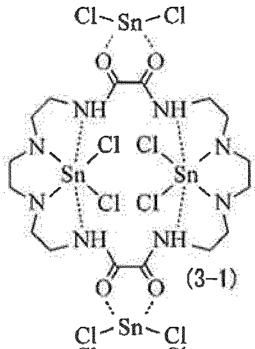

(3-1)

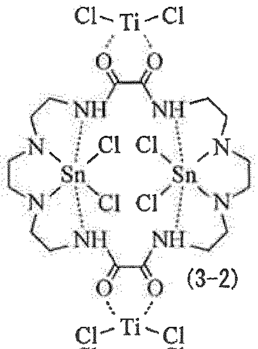

(3-2)

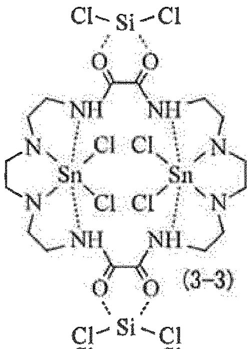

(3-3)

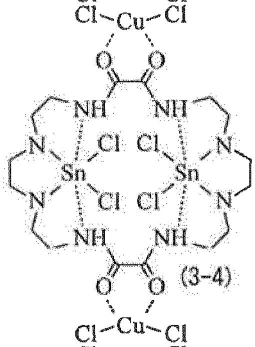

(3-4)

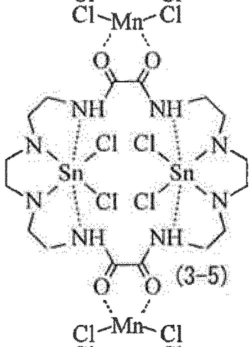

(3-5)

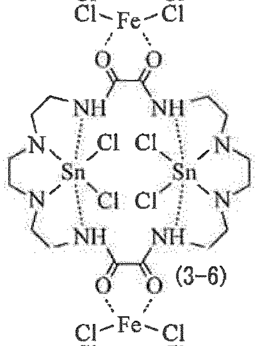

(3-6)

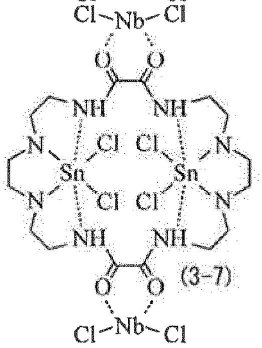

(3-7)

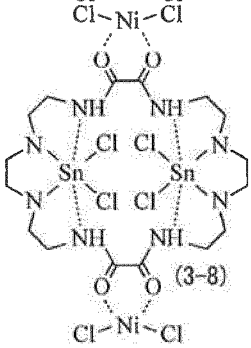

(3-8)

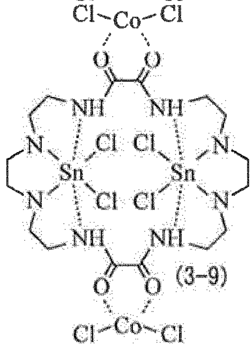

(3-9)

[Chem. 10]

Chem. 10

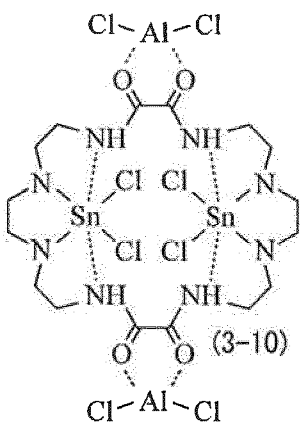

(3-10)

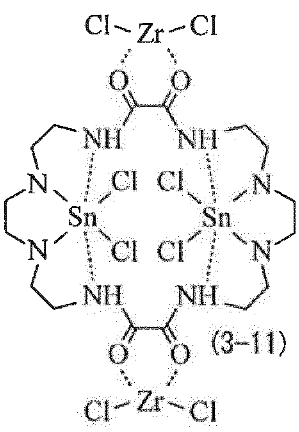

(3-11)

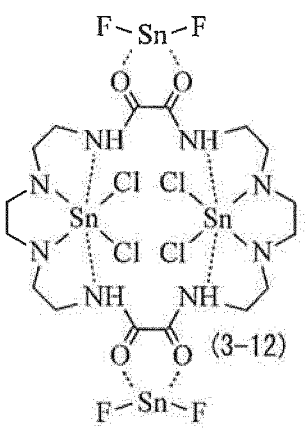

(3-12)

(Fourth Cyclic Compound)

The fourth cyclic compound is, for example, a compound represented by each of the following formulae (4-1) to (4-24), for example. The compound represented by each of the formulae (4-1) to (4-12) is a compound in which all of X9 to X16 in the formula (4) are oxo groups, and the compound represented by each of the formulae (4-13) to (4-24) is a compound in which all of X9 to X16 in the formula (4) are imino groups.

It is to be noted that, in each of the formulae (4-1) to (4-11) and the formulae (4-13) to (4-23), for example, a case where each of Y11 to Y14 in the formula (4) is chlorine is represented. Each of Y11 to Y14 is, however, not limited to chlorine as described above. Therefore, each of Y11 to Y14 may be fluorine as represented by each of the formulae (4-12) and (4-24), for example.

[Chem. 11]

Chem. 11

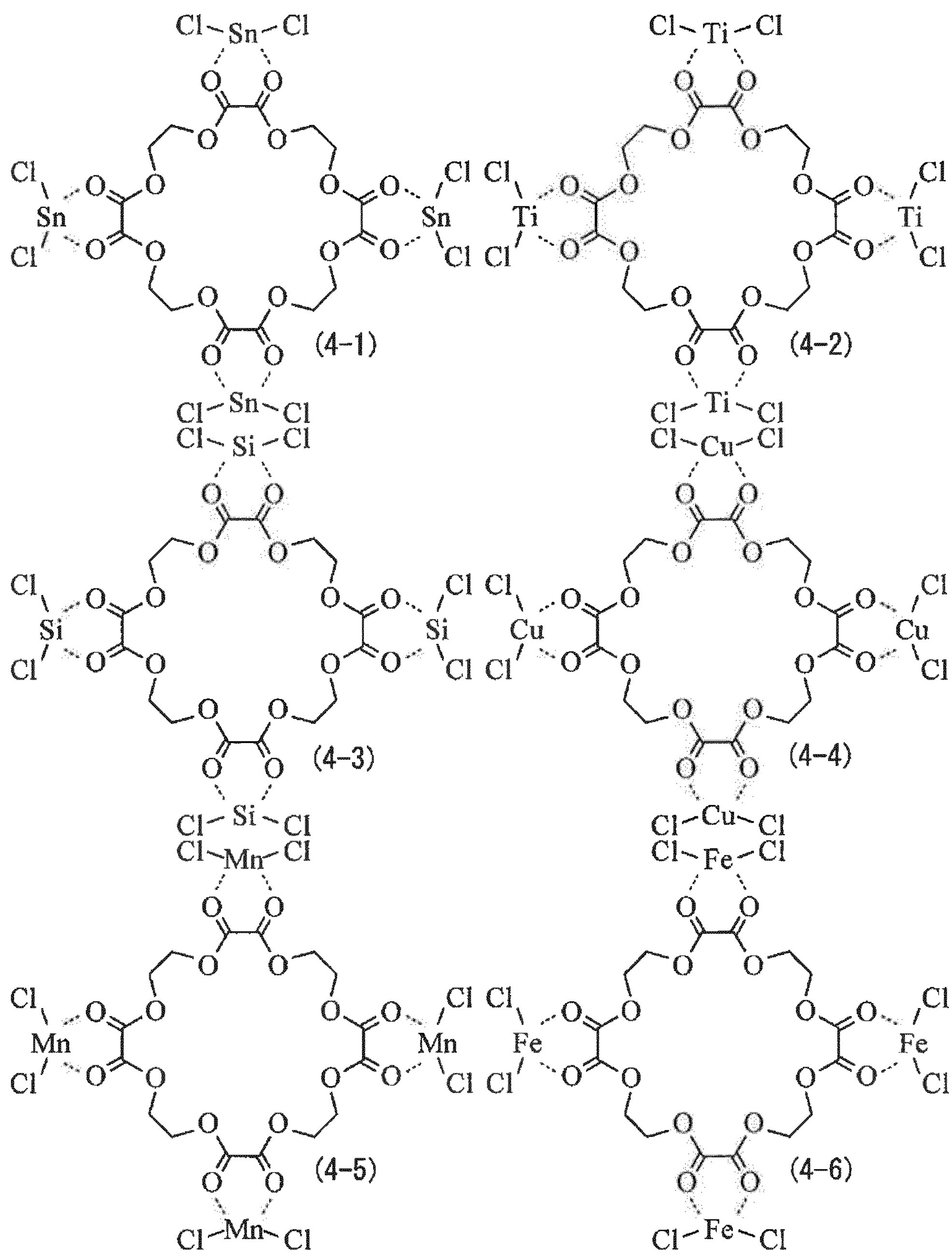

(4-1) (4-2) (4-3) (4-4) (4-5) (4-6)

[Chem. 12]

Chem. 12

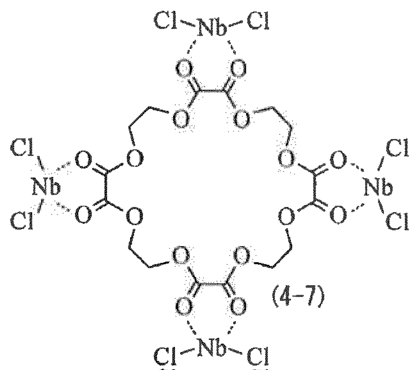

(4-7)

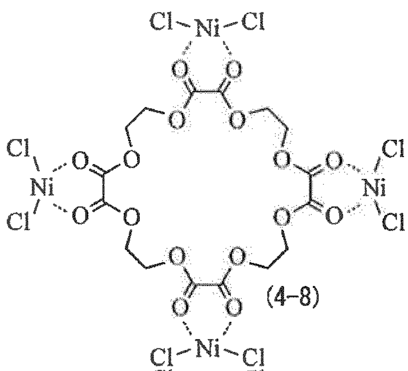

(4-8)

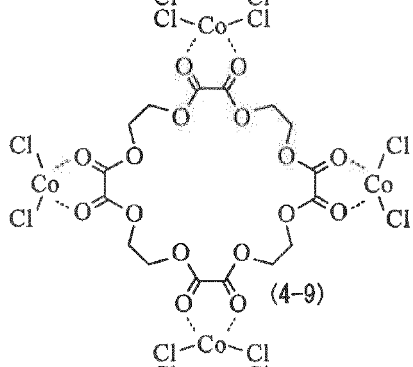

(4-9)

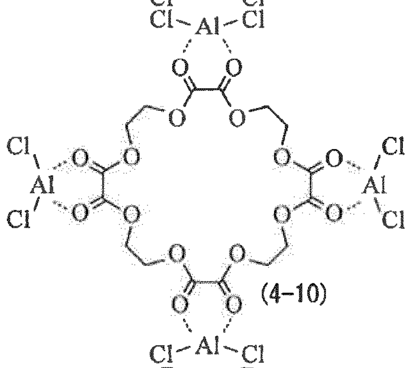

(4-10)

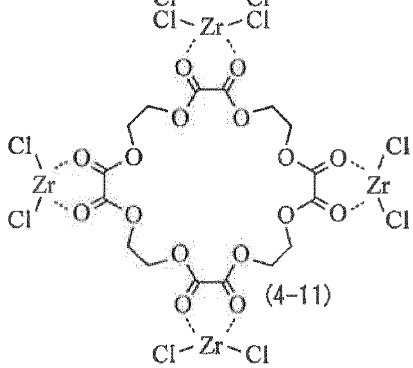

(4-11)

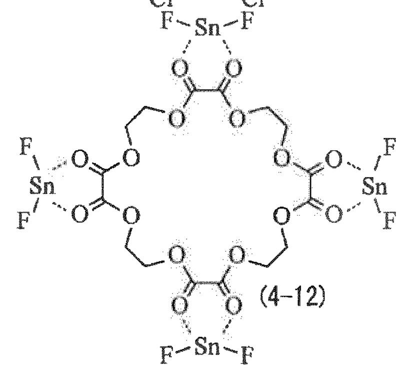

(4-12)

[Chem. 13]

Chem. 13

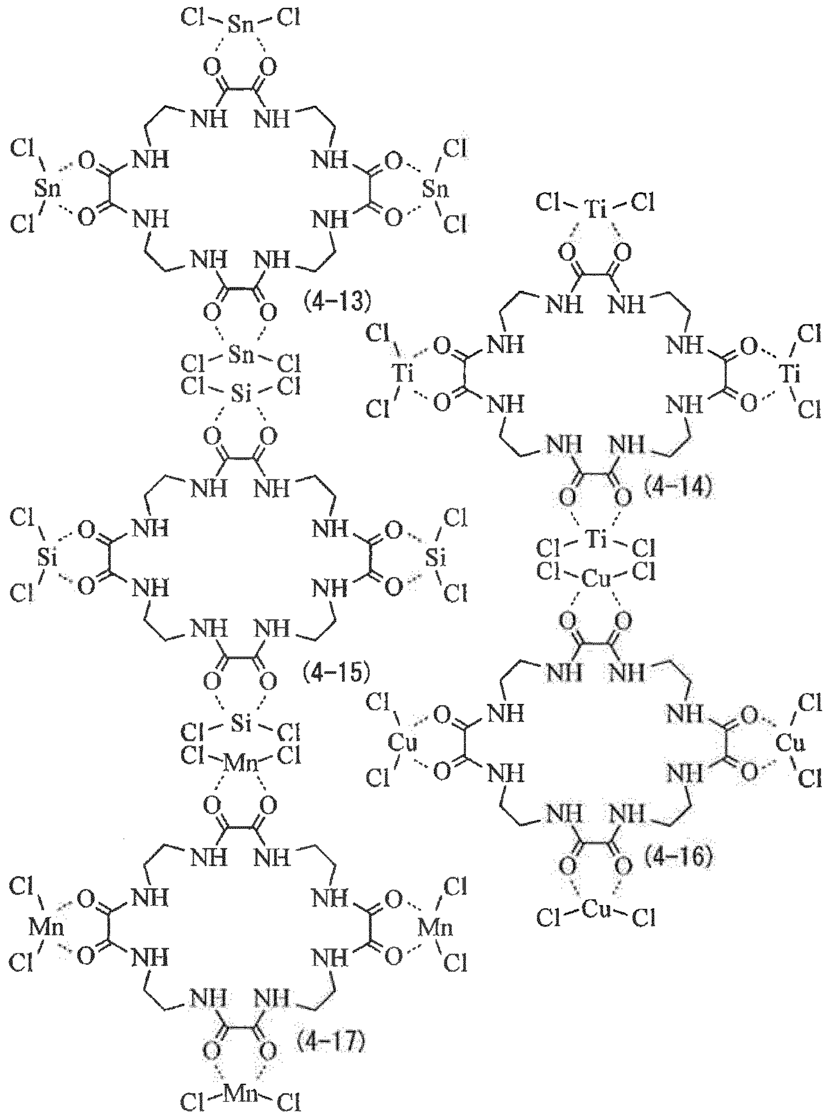

(4-13) (4-14) (4-15) (4-16) (4-17)

[Chem. 14]

Chem. 14

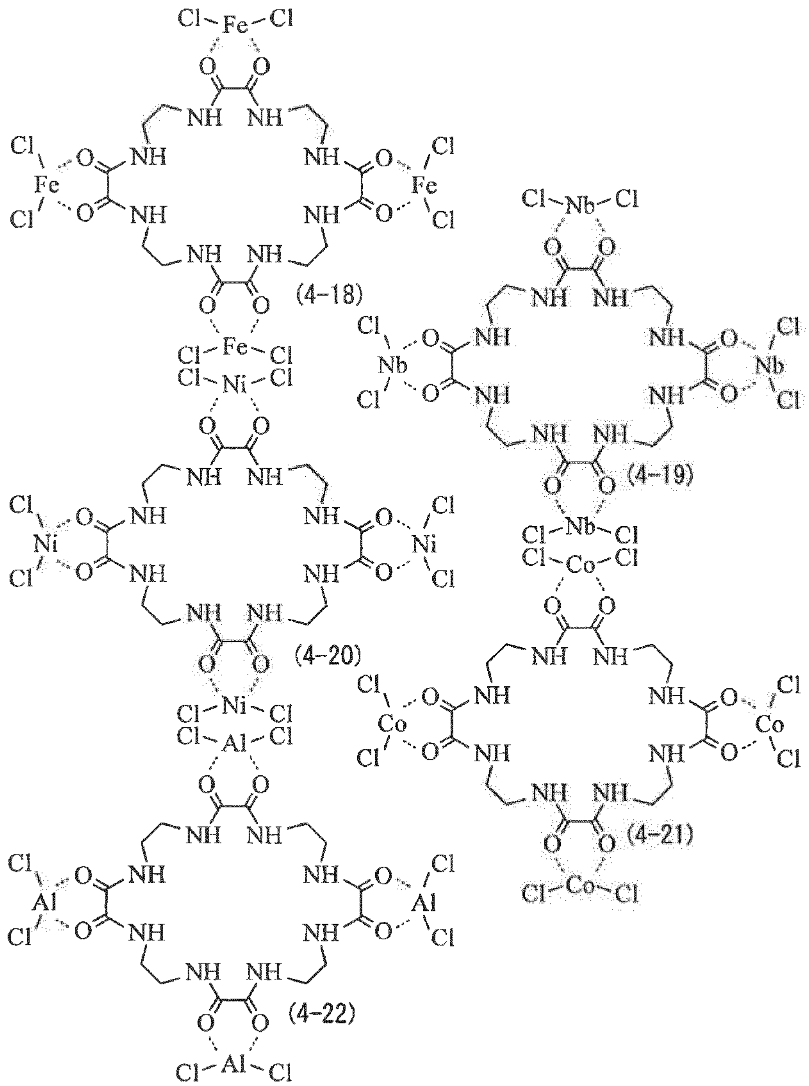

(4-18)

(4-19)

(4-20)

(4-21)

(4-22)

[Chem. 15]

Chem. 15

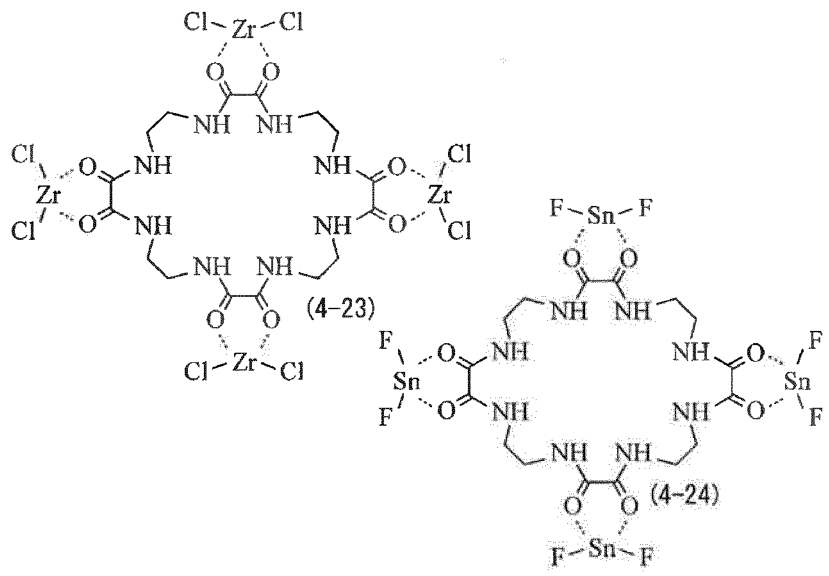

(4-23)

(4-24)

(Fifth Cyclic Compound)

The fifth cyclic compound is, for example, a compound represented by each of the following formulae (5-1) to (5-12), etc.

It is to be noted that, in each of the formulae (5-1) to (5-11), for example, a case where each of Y15 to Y20 in the formula (5) is chlorine is represented. Each of Y15 to Y20 is, however, not limited to chlorine as described above. Therefore, each of Y15 to Y20 may be fluorine as represented by the formula (5-12), for example.

Further, in each of the formulae (5-1) to (5-12), for example, a case where each of M19 and M20 in the formula (5) is tin is represented. Each of M19 and M20 is, however, not limited to tin as described above. Therefore, each of M19 and M20 may be any of titanium, silicon, copper, manganese, iron, niobium, nickel, cobalt, aluminum, and zirconium.

[Chem. 16]

Chem. 16

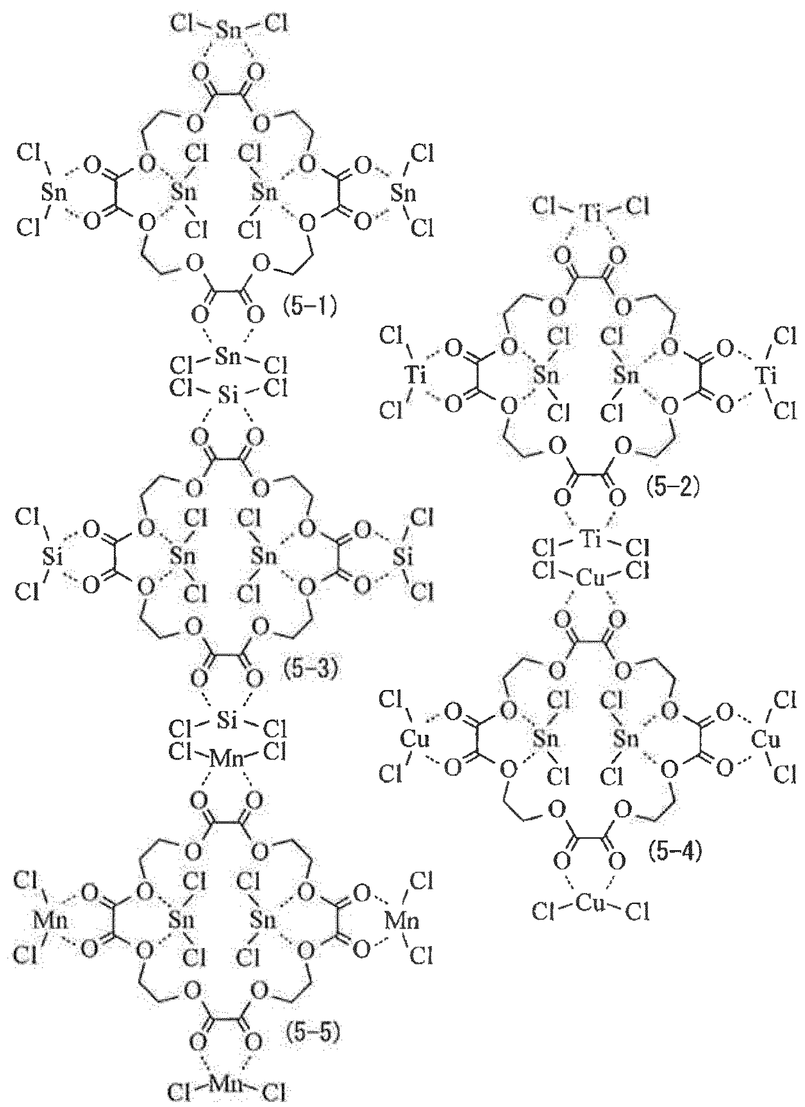

(5-1)

(5-2)

(5-3)

(5-4)

(5-5)

[Chem. 17]

Chem. 17

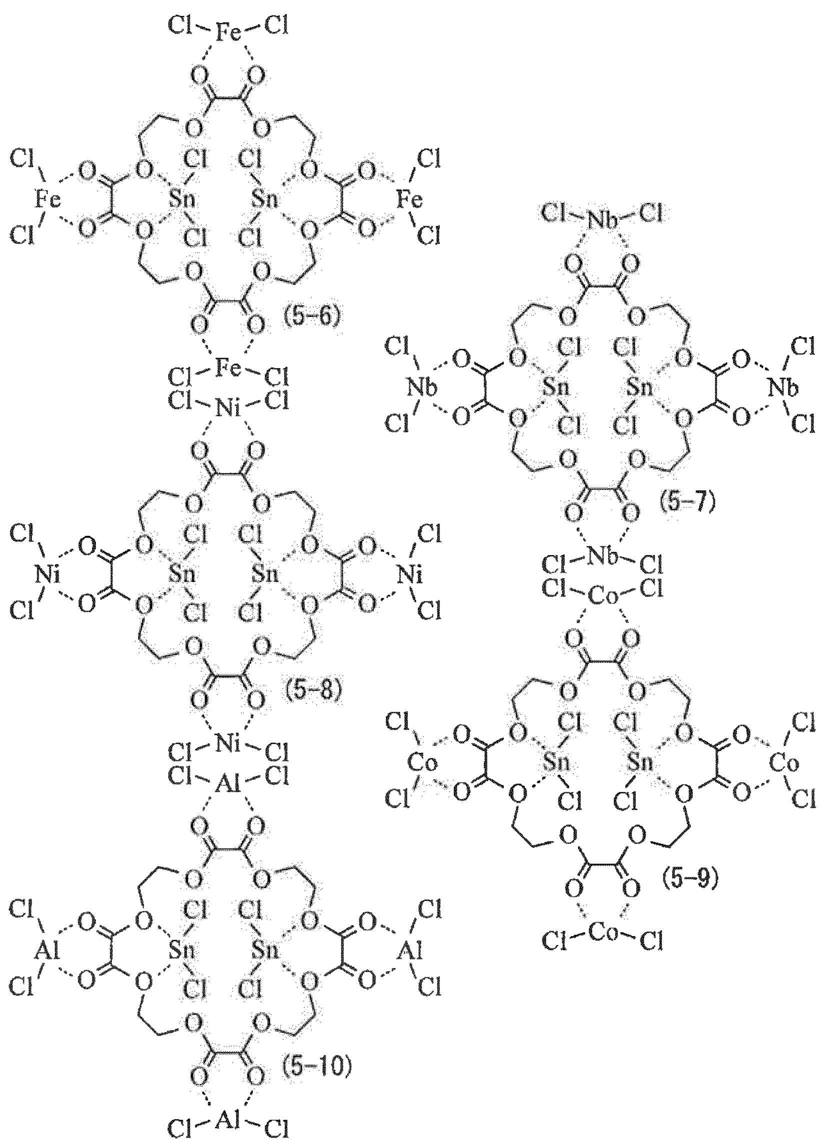

(5-6)

(5-7)

(5-8)

(5-9)

(5-10)

[Chem. 18]

Chem. 18

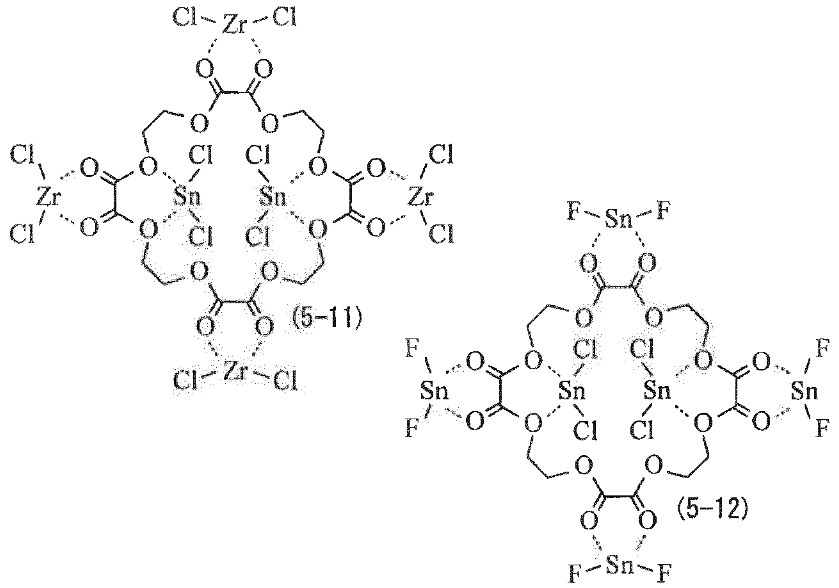

(5-11)

(5-12)

(Sixth Cyclic Compound)

The sixth cyclic compound is, for example, a compound represented by each of the following formulae (6-1) to (6-12), etc.

It is to be noted that, in each of the formulae (6-1) to (6-11), for example, a case where each of Y21 to Y26 in the formula (6) is chlorine is represented. Each of Y21 to Y26 is, however, not limited to chlorine as described above. Therefore, each of Y21 to Y26 may be fluorine, as represented by the formula (6-12), for example.

Further, in each of the formulae (6-1) to (6-12), for example, a case where each of M25 and M26 in the formula (6) is tin is represented. Each of M25 and M26 is, however, not limited to tin as described above. Therefore, each of M25 and M26 may be any of titanium, silicon, copper, manganese, iron, niobium, nickel, cobalt, aluminum, and zirconium.

[Chem. 19]

Chem. 19

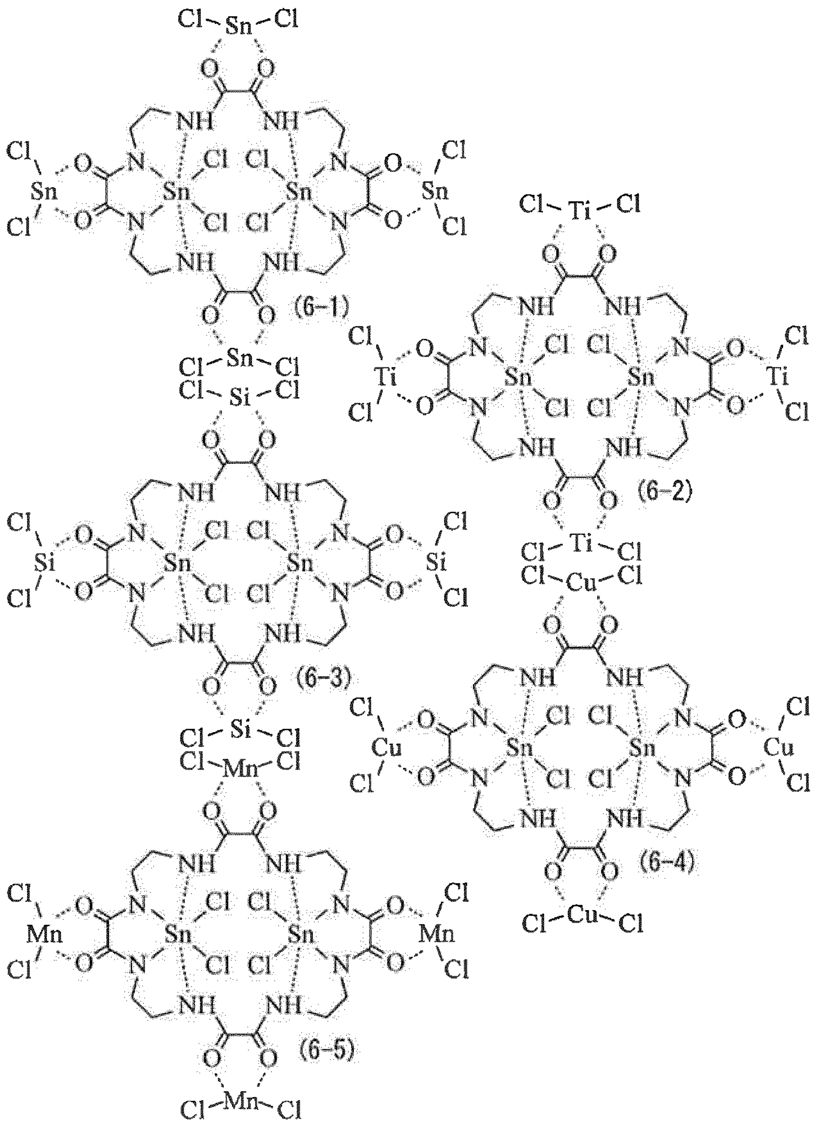

(6-1)

(6-2)

(6-3)

(6-4)

(6-5)

[Chem. 20]

Chem. 20

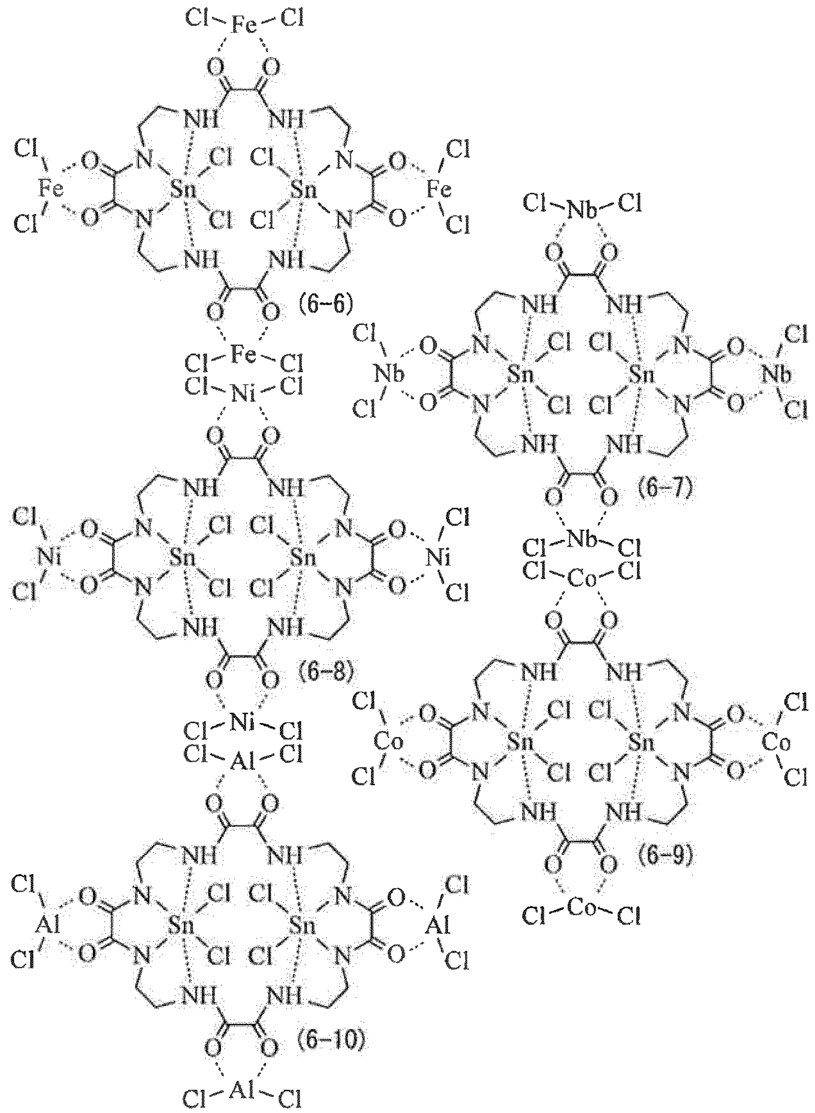

(6-6)

(6-7)

(6-8)

(6-9)

(6-10)

[Chem. 21]

Chem. 21

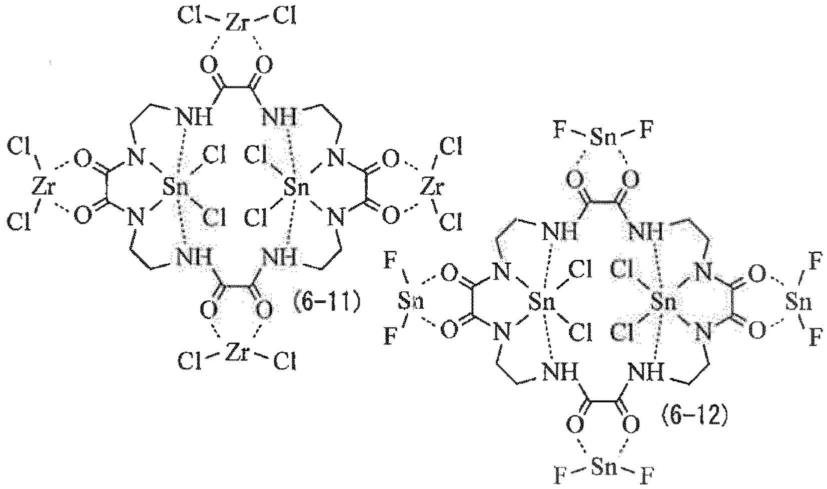

(6-11)

(6-12)

<1-2. Manufacturing Method>

Each of the first cyclic compound, the second cyclic compound, the third cyclic compound, the fourth cyclic compound, the fifth cyclic compound, and the sixth cyclic compounds is manufactured, for example, by the following procedure.

[First Cyclic Compound]

In a case of manufacturing a compound in which all of X1 to X8 in the formula (1) are oxo groups, of the first cyclic compound, a first oxygen-containing compound represented by a formula (10-1) is obtained by reacting HO-$C_2H_4$-O-$C_2H_4$-O-$C_2H_4$-OH with Cl-C(=O)-C(=O)-Cl. In this case, for example, a catalyst such as benzene, dioxane, or pyridine is used, and a reaction temperature may be adjusted on an as-needed basis. Thereafter, the first oxygen-containing compound and a metal compound ($MY_2$ or $MY_4$) are reacted. In this case, for example, a catalyst such as methanol is used, and a reaction temperature may be adjusted on an as-needed basis. The metal compound used here is, for example, a compound containing, as constituent elements, a metal element (M) corresponding to each of M1 and M2 in the formula (1) and an element (Y) corresponding to each of Y1 and Y2 in the formula (1), and may be a hydrate. The first cyclic compound is thereby obtained.

In a case of manufacturing a compound in which all of X1 to X8 in the formula (1) are imino groups, of the first cyclic compound, a first nitrogen-containing compound represented by a formula (10-2) is obtained by reacting $H_2N$-$C_2H_4$-NH-$C_2H_4$-NH-$C_2H_4$-$NH_2$ with $H_5C_2$-O-C(=O)-C(=O)-O-$C_2H_5$. In this case, for example, a catalyst such as sodium hydroxide is used, and a reaction temperature may be adjusted on an as-needed basis. Thereafter, the first nitrogen-containing compound is reacted with the above-described metal compound. In this case, for example, a catalyst such as methanol is used, and a reaction temperature may be adjusted on an as-needed basis. The first cyclic compound is thereby obtained.

[Chem. 22]

Chem. 22

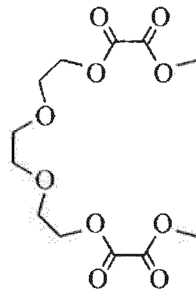
(10-1)
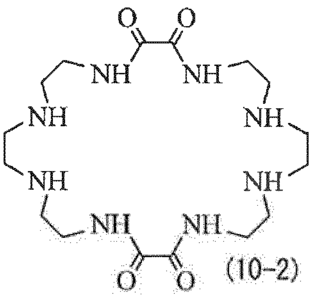
(10-2)
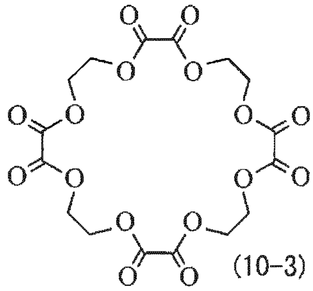
(10-3)
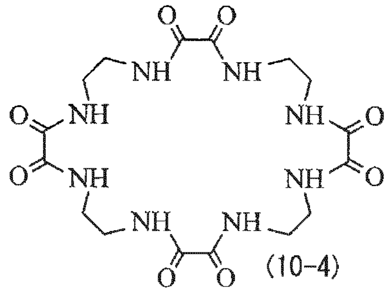
(10-4)

[Second Cyclic Compound]

In a case of manufacturing the second cyclic compound, the first oxygen-containing compound and a metal compound are reacted, and thereafter, the reactant is further reacted with a metal compound. In this case, for example, a catalyst such as methanol is used, and a reaction temperature may be adjusted on an as-needed basis. Here, the former metal compound is, for example, a compound containing, as constituent elements, a metal element corresponding to each of M5 and M6 in the formula (2) and an element corresponding to each of Y5 and Y6 in the formula (2), and may be a hydrate. Meanwhile, the latter metal compound is, for example, a compound containing, as constituent elements, a metal element corresponding to each of M3 and M4 in the formula (2) and an element corresponding to each of Y3 and Y4 in the formula (2), and may be a hydrate. The second cyclic compound is thereby obtained.

[Third Cyclic Compound]

In a case of manufacturing the third cyclic compound, the first nitrogen-containing compound and a metal compound are reacted, and thereafter, the reactant is further reacted with a metal compound. In this case, for example, a catalyst such as methanol is used, and a reaction temperature may be adjusted on an as-needed basis. Here, the former metal compound is, for example, a compound containing, as constituent elements, a metal element corresponding to each of M9 and M10 in the formula (3) and an element corresponding to each of Y9 and Y10 in the formula (3), and may be a hydrate. Meanwhile, the latter metal compound is, for example, a compound containing, as constituent elements, a metal element corresponding to each of M7 and M8 in the formula (3) and an element corresponding to each of Y7 and Y8 in the formula (3), and may be a hydrate. The third cyclic compound is thereby obtained.

[Fourth Cyclic Compound]

In a case of manufacturing a compound in which all of X9 to X16 in the formula (4) are oxo groups, of the fourth cyclic compound, a second oxygen-containing compound represented by a formula (10-3) is obtained by reacting HO-$C_2H_4$-O-$C_2H_4$-O-$C_2H_4$-OH with Cl-C(=O)-C(=O)-C1. In this case, for example, a catalyst such as benzene, dioxane, or pyridine is used, and a reaction temperature may be adjusted on an as-needed basis. Thereafter, the second oxygen-containing compound and a metal compound are reacted. In this case, for example, a catalyst such as methanol is used, and a reaction temperature may be adjusted on an as-needed basis. The metal compound used here is, for example, a compound containing, as constituent elements, a metal element corresponding to each of M11 to M14 in the formula (4) and an element corresponding to each of Y11 to Y14 in the formula (4), and may be a hydrate. The fourth cyclic compound is thereby obtained.

In a case of manufacturing a compound in which all of X9 to X16 in the formula (4) are imino groups, of the fourth cyclic compound, a second nitrogen-containing compound represented by a formula (10-4) is obtained by reacting $H_2N-C_2H_4-NH-C_2H_4-NH-C_2H_4-NH_2$ with $H_5C_2-O-C(=O)-C(=O)-O-C_2H_5$. In this case, for example, a catalyst such as sodium hydroxide is used, and a reaction temperature may be adjusted on an as-needed basis. Thereafter, the second nitrogen-containing compound is reacted with the above-described metal compound. In this case, for example, a catalyst such as methanol is used, and a reaction temperature may be adjusted on an as-needed basis. The first cyclic compound is thereby obtained.

[Fifth Cyclic Compound]

In a case of manufacturing the fifth cyclic compound, the second oxygen-containing compound and a metal compound are reacted, and thereafter, the reactant is further reacted with a metal compound. In this case, for example, a catalyst such as methanol is used, and a reaction temperature may be adjusted on an as-needed basis. Here, the former metal compound is, for example, a compound containing, as constituent elements, a metal element corresponding to each of M19 and M20 in the formula (5) and an element corresponding to each of Y19 and Y20 in the formula (5), and may be a hydrate. Meanwhile, the latter metal compound is, for example, a compound containing, as constituent elements, a metal element corresponding to each of M15 to M18 in the formula (5) and an element corresponding to each of Y15 to Y18 in the formula (5), and may be a hydrate. The fifth cyclic compound is thereby obtained.

[Sixth Cyclic Compound]

In a case of manufacturing the sixth cyclic compound, the second nitrogen-containing compound and a metal compound are reacted, and thereafter, the reactant is further reacted with a metal compound. In this case, for example, a catalyst such as methanol is used, and a reaction temperature may be adjusted on an as-needed basis. Here, the former metal compound is, for example, a compound containing, as constituent elements, a metal element corresponding to each of M25 and M26 in the formula (6) and an element corresponding to each of Y25 and Y26 in the formula (6), and may be a hydrate. Meanwhile, the latter metal compound is, for example, a compound containing, as constituent elements, a metal element corresponding to each of M21 to M24 in the formula (6) and an element corresponding to each of Y21 to Y24 in the formula (2), and may be a hydrate. The sixth cyclic compound is thereby obtained.

<1-3. Workings and Effects>

According to the cyclic compound, one or more of the first cyclic compound, the second cyclic compound, the third cyclic compound, the fourth cyclic compound, the fifth cyclic compound, and the sixth cyclic compound are included. In this case, as described above, it is possible for the cyclic compound to smoothly insert and extract the electrode reaction material, etc. by utilizing the internal space (coordination field) of the cyclic skeleton and the metal atoms (M1 to M26) introduced into the cyclic skeleton. Moreover, the cyclic compound has a superior extention-contraction characteristic by utilizing the extention-contraction characteristic of the cyclic skeleton, and a potential of an electrode containing the cyclic compound is made higher by utilizing the metal atoms introduced into the cyclic skeleton. Accordingly, it is possible to improve a characteristic of an electrochemical device including the cyclic compound, etc.

In particular, when each of M1 to M26 in the formulae (1) to (6) is tin, etc., it is easier for the metal atoms (M1 to M26) to be coordinated to the cyclic skeleton. Accordingly, it is easier for the cyclic compound to extend and contract, and the potential of the electrode containing the cyclic compound becomes sufficiently high. As a result, it is possible to obtain a higher effect.

Further, when each of Y1 to Y26 in the formulae (1) to (6) is fluorine, etc., it is easier for the metal atoms (M1 to M26) to be coordinated to the cyclic skeleton. Accordingly, it is easier for the cyclic compound to extend and contract, and the potential of the electrode containing the cyclic compound becomes sufficiently high. As a result, it is possible to obtain a higher effect.

Further, when all of X1 to X8 in the formula (1) are oxo groups or imino groups and all of X9 to X16 in the formula (4) are oxo groups or imino groups, it is easier for each of the first cyclic compound and the fourth cyclic compound to extend and contract. As a result, it is possible to obtain a higher effect.

Further, when the first cyclic compound is the compound represented by the formula (7), the second cyclic compound is the compound represented by the formula (8), and the third cyclic compound is the compound represented by the formula (9), it is easier for each of the first cyclic compound, the second cyclic compound, and the third cyclic compound to extend and contract. As a result, it is possible to obtain a higher effect.

<2. Lithium Ion Secondary Battery and Anode for Lithium Ion Secondary Battery (Cylindrical Type)>

Next, description is given of an electrode for a lithium ion secondary battery according to an embodiment of the present technology (hereinafter, simply referred to as an "anode") that uses the above-described cyclic compound and a lithium ion secondary battery according to an embodiment of the present technology (hereinafter, simply referred to as a "lithium ion secondary battery") that uses the above-described cyclic compound.

It is to be noted that, since the above-described anode is a portion (one component) of the lithium ion secondary battery which will be described below, the anode will be described together below.

The lithium ion secondary battery described here is, for example, a secondary battery in which a battery capacity (a capacity of an anode 22 which will be described later) is obtained by utilizing a phenomenon of insertion and extraction of lithium.

As for a series of specific examples described below as appropriate, that is, a plurality of candidates listed and described related to a material, a forming method, etc., only any one of them may be used, or any two or more of them may be combined with each other.

<2-1. Configuration>

FIG. 1 illustrates a cross-sectional configuration of a lithium ion secondary battery, and FIG. 2 enlarges a cross-sectional configuration of a main part (spirally-wound electrode body 20) of the lithium ion secondary battery illustrated in FIG. 1. It is to be noted that FIG. 2 illustrates only a portion of the spirally-wound electrode body 20.

As illustrated in FIG. 1, the lithium ion secondary battery is, for example, a cylindrical-type lithium ion secondary battery in which a battery device (the spirally-wound electrode body 20) is accommodated inside a cylindrical battery can 11.

Specifically, the lithium ion secondary battery includes, for example, a pair of insulating plates 12 and 13 and the spirally-wound electrode body 20 inside the battery can 11. The spirally-wound electrode body 20 is, for example, a structure formed by stacking a cathode 21 and the anode 22 with a separator 23 interposed therebetween and thereafter spirally winding the cathode 21, the anode 22, and the separator 23. The spirally-wound electrode body 20 is impregnated with an electrolytic solution which is a liquid electrolyte.

The battery can 11 has, for example, a hollow cylindrical structure in which one end is closed and the other end is opened. The battery can 11 includes, for example, a metal material such as iron. It is to be noted that a surface of the battery can 11 may be plated with a metal material such as nickel, for example. The insulating plates 12 and 13 each extend, for example, in a direction intersecting a spirally-wound peripheral surface of the spirally-wound electrode body 20, and are so disposed as to sandwich the spirally-wound electrode body 20 therebetween.

At the open end of the battery can 11, for example, a battery cover 14, a safety valve mechanism 15, and a positive temperature coefficient device (PTC device) 16 are attached by being swaged with a gasket 17. The open end of the battery can 11 is therefore sealed. A material for forming the battery cover 14 is, for example, similar to a material for forming the battery can 11. The safety valve mechanism 15 and the positive temperature coefficient device 16 are provided on inner side of the battery cover 14. The safety valve mechanism 15 is electrically coupled to the battery cover 14 via the positive temperature coefficient device 16. In the safety valve mechanism 15, for example, when an internal pressure of the battery can 11 becomes equal to or higher than a predetermined value as a result of an internal short-circuit, external heating, etc., a disk plate 15A is reversed. The electrical coupling between the battery cover 14 and the spirally-wound electrode body 20 is thereby cut off. Electrical resistance of the positive temperature coefficient device 16 increases with an increase in temperature in order to prevent abnormal heat generation due to a large current. The gasket 17 includes, for example, an insulating material. It is to be noted that, for example, asphalt, etc. may be applied to a surface of the gasket 17.

For example, a center pin 24 is inserted into a space 20C provided at a spirally-winding center of the spirally-wound electrode body 20. It is to be noted that the center pin 24 may be omitted. A cathode lead 25 is coupled to the cathode 21. The cathode lead 25 includes, for example, an electrically-conductive material such as aluminum. The cathode lead 25 is electrically coupled to the battery cover 14 via the safety valve mechanism 15, for example. An anode lead 26 is coupled to the anode 22. The anode lead 26 includes, for example, an electrically-conductive material such as nickel. The anode lead 26 is electrically coupled to the battery can 11, for example.

[Cathode

As illustrated in FIG. 2, the cathode 21 includes, for example, a cathode current collector 21A and a cathode active material layer 21B provided on the cathode current collector 21A. The cathode active material layer 21B may be provided on, for example, only a single surface of the cathode current collector 21A, or may be provided on both surfaces of the cathode current collector 21A. FIG. 2 illustrates, for example, a case where the cathode active material layers

21B are provided on both surfaces of the cathode current collector 21A.

(Cathode Current Collector)

The cathode current collector 21A includes, for example, an electrically-conductive material such as aluminum.

(Cathode Active Material Layer)

The cathode active material layer 21B contains, as a cathode active material, a cathode material capable of inserting and extracting lithium. It is to be noted that the cathode active material layer 21B may further contain other materials such as a cathode binder or a cathode conductive agent, for example.

(Cathode Material)

The cathode material contains, for example, a lithium compound. The lithium compound is a generic term for a compound containing lithium as a constituent element. One reason for this is that it is possible to obtain a high energy density. The lithium compound is not particularly limited in its type; however, the lithium compound is, for example, a lithium composite oxide, a lithium phosphate compound, etc.

The lithium composite oxide is a generic term for an oxide containing lithium and one or more other elements as constituent elements. The lithium composite oxide has, for example, a crystal structure of a layered rock salt type, a spinel type, etc. The lithium phosphate compound is a generic term for a phosphate compound containing lithium and one or more other elements as constituent elements. The lithium phosphate compound has, for example, a crystal structure of olivine type, etc.

The other elements are elements other than lithium. The other elements are not particularly limited in their types; however, in particular, it is preferable that the other elements be elements belonging to any of Group 2 to Group 15 of a long-period periodic table. One reason for this is that it is possible to obtain a high voltage. Specifically, examples of the other elements include nickel, cobalt, manganese, iron, etc.

Examples of the lithium composite oxide having the crystal structure of the layered rock salt type include $LiNiO_2$, $LiCoO_2$, $LiCo_{0.98}Al_{0.01}Mg_{0.01}O_2$, $LiNi_{0.5}Co_{0.2}Mn_{0.3}O_2$, $LiNi_{0.8}Co_{0.15}Al_{0.05}O_2$, $LiNi_{0.33}Co_{0.33}Mn_{0.33}O_2$, $Li_{1.2}Mn_{0.52}Co_{0.175}Ni_{0.1}O_2$, $Li_{1.15}(Mn_{0.65}Ni_{0.22}Co_{0.13})O_2$, etc. Examples of the lithium composite oxide having the crystal structure of the spinel type include $LiMn_2O_4$, etc. Examples of the lithium phosphate compound having the crystal structure of the olivine type include $LiFePO_4$, $LiMnPO_4$, $LiFe_{0.5}Mn_{0.5}PO_4$, $LiFe_{0.3}Mn_{0.7}PO_4$, etc.

(Cathode Binder and Cathode Conductive Agent)

The cathode binder includes, for example, synthetic rubber, a polymer compound, etc. Examples of the synthetic rubber include styrene-butadiene-based rubber, etc. Examples of the polymer compound include polyvinylidene fluoride, polyimide, etc.

The cathode conductive agent includes, for example, an electrically-conductive material such as a carbon material. Examples of the carbon material include graphite, carbon black, acetylene black, ketjen black, etc. It is to be noted that the cathode conductive agent may be a metal material, an electrically-conductive polymer, etc.

[Anode]

As illustrated in FIG. 2, the anode 22 includes, for example, an anode current collector 22A and an anode active material layer 22B provided on the anode current collector 22A. The anode active material layer 22B may be provided on, for example, only a single surface of the anode current collector 22A, or may be provided on both surfaces of the anode current collector 22A. FIG. 2 illustrates, for example, a case where the anode active material layers 22B are provided on both surfaces of the anode current collector 22A.

(Anode Current Collector)

The anode current collector 22A includes, for example, an electrically-conductive material such as copper. It is preferable that a surface of the anode current collector 22A be roughened by an electrolysis method, etc. One reason for this is that an adhesion characteristic of the anode active material layer 22B to the anode current collector 22A is improved by utilizing an anchor effect.

(Anode Active Material Layer)

The anode active material layer 22B contains, as an anode active material, an anode material capable of inserting and extracting lithium. It is to be noted that the anode active material layer 22B may further contain other materials such as an anode binder or an anode conductive agent, for example.

In order to prevent lithium metal from being unintentionally deposited on the surface of the anode 22 during charging, it is preferable that a capacity of the chargeable anode material be greater than a discharge capacity of the cathode 21. In other words, it is preferable that electrochemical equivalent of the anode material be greater than electrochemical equivalent of the cathode 21.

(Anode Material)

The anode material includes the cyclic compound described above. That is, the anode material contains one or more of the first cyclic compound, the second cyclic compound, the third cyclic compound, the fourth cyclic compound, the fifth cyclic compound, and the sixth cyclic compound. It is to be noted that a type of each of the first cyclic compound, the second cyclic compound, the third cyclic compound, the fourth cyclic compound, the fifth cyclic compound, and the sixth cyclic compound may be only one type or two or more types.

(Other Anode Materials)

It is to be noted that the anode material may contain, for example, other anode material in addition to the cyclic compound. The other materials are not particularly limited in their types; however, examples of the other materials include a carbon material, a metal-based material, etc.

The carbon material is a generic term for a material containing carbon as a constituent element. One reason for this is that a crystal structure of the carbon material hardly changes at the times of insertion and extraction of lithium, which makes it possible to stably obtain a high energy density. Further, another reason for this is that the carbon material also serves as an anode conductive agent, which improves electric conductivity of the anode active material layer 22B.

Examples of the carbon material include graphitizable carbon, non-graphitizable carbon, graphite, etc. It is to be noted that plane spacing of a (002) plane in the non-graphitizable carbon is preferably 0.37 nm or more, and plane spacing of a (002) plane in the graphite is preferably 0.34 nm or less.

More specifically, examples of the carbon material include pyrolytic carbons, cokes, glassy carbon fibers, fired bodies of organic polymer compounds, activated carbon, carbon blacks, etc. The cokes include, for example, pitch coke, needle coke, petroleum coke, etc. The fired body of the organic polymer compound is a fired product as a result of firing (carbonizing) a polymer compound such as a phenol resin or a furan resin at an appropriate temperature. Other than the above, the carbon material may be, for example, low-crystalline carbon subjected to a heat treatment at a temperature of about 1000° C or lower, or amorphous carbon. Examples of a shape of the carbon material include a fibrous shape, a spherical shape, a granular shape, a scaly shape, etc.

The metal-based material is a generic term for a material containing one or more of metal elements and metalloid elements as constituent elements. One reason for this is that it is possible to obtain a high energy density.

The metal-based material may be a simple substance, an alloy, a compound, a mixture of two or more thereof, or a material containing one or more phases thereof. It is to be noted that the alloy encompasses not only a compound containing two or more metal elements, but also a compound containing one or more metal elements and one or more metalloid elements. Further, the alloy may contain one or more non-metal elements. Examples of a structure of the metal-based material include a solid solution, a eutectic (a eutectic mixture), an intermetallic compound, a coexistence of two or more thereof, etc.

Each of the metal element and the metalloid element is an element that is able to form an alloy with lithium. Specifically, examples of the metal element and the metalloid element include magnesium, boron, aluminum, gallium, indium, silicon, germanium, tin, lead, bismuth, cadmium, silver, zinc, hafnium, zirconium, yttrium, palladium, platinum, etc.

In particular, silicon and tin are preferable, and silicon is more preferable. One reason for this is that it is possible to obtain a remarkably-high energy density owing to superior insertion and extraction performance of lithium.

Specifically, the metal-based material may be a simple substance of silicon, an alloy of silicon, a compound of silicon, a simple substance of tin, an alloy of tin, a compound of tin, a mixture of two or more thereof, or a material containing one or more phases thereof. Since the single substance described here refers to a general single substance, the single substance may contain a slight amount of impurities. In other words, purity of the single substance is not necessarily limited to 100%.

The alloy of silicon contains, for example, tin, nickel, copper, iron, cobalt, manganese, zinc, indium, silver, titanium, germanium, bismuth, antimony, chromium, etc., as constituent elements other than silicon. The compound of silicon contains, for example, carbon, oxygen, etc., as constituent elements other than silicon. It is to be noted that the

compound of silicon may contain, for example, the series of constituent elements described related to the alloy of silicon, as a constituent element other than silicon.

Examples of the alloy of silicon and the compound of silicon include $SiB_4$, $SiB_6$, $Mg_2Si$, $Ni_2Si$, $TiSi_2$, $MoSi_2$, $CoSi_2$, $NiSi_2$, $CaSi_2$, $CrSi_2$, CusSi, $FeSi_2$ $MnSi_2$, $NbSi_2$, $TaSi_2$, $VSi_2$, $WSi_2$, $ZnSi_2$, SiC, $Si_3N_4$, $Si_2N_2O$, $SiO_v$ ($0 < v \leq 2$), etc. It is to be noted that a range of v may be, for example, $0.2 < v < 1.4$.

The alloy of tin contains, for example, silicon, nickel, copper, iron, cobalt, manganese, zinc, indium, silver, titanium, germanium, bismuth, antimony, chromium, etc., as constituent elements other than tin. The compound of tin contains, for example, carbon, oxygen, etc., as constituent elements other than tin. It is to be noted that the compound of tin may contain, for example, the series of constituent elements described related to the alloy of tin as a constituent element other than tin.

Examples of the alloy of tin and the compound of tin include $SnO_w$ ($0 < w \leq 2$), $SnSiO_3$, $Mg_2Sn$, etc.

In particular, it is preferable that the anode material contain the carbon material, the metal-based material, or both, together with the cyclic compound. In this case, the anode material may contain the carbon material together with the cyclic compound, may contain the metal-based material together with the cyclic compound, or may contain the carbon material and the metal-based material together with the cyclic compound. One reason for this is that it is possible to obtain a high theoretical capacity (battery capacity) and it is more difficult for the anode active material layer 22B to expand and contract sufficiently at the times of charge and discharge.

A mixture ratio of the cyclic compound to the carbon material and the metal-based material is not particularly limited. In particular, a weight ratio of the cyclic compound to the cyclic compound, the carbon material, and the metal-based material (= weight of cyclic compound / (weight of cyclic compound + weight of carbon material + weight of metal-based material)) is preferably from 0.01 to 0.99, and more preferably, from 0.05 to 0.90. One reason for this is that it is possible to obtain a high battery capacity while the expansion and contraction of the anode active material layer 22B are sufficiently suppressed at the times of charge and discharge.

(Anode Binder and Anode Conductive Agent)

Details related to the anode binder are, for example, similar to those related to the cathode binder. Details of the anode conductive agent are, for example, similar to those of the cathode conductive agent.

(Method of Forming Anode Active Material Layer)

A method of forming the anode active material layer 22B is not particularly limited; however, examples thereof include a coating method, a vapor phase method, a liquid phase method, a thermal spraying method, a firing method (a sintering method), etc. The coating method is, for example, a method that applies, to the anode current collector 22A, a solution in which a mixture of the anode active material in the form of particles (powder), the anode binder, etc. is dissolved or dispersed by an organic solvent, etc. Examples of the vapor phase method include a physical deposition method, a chemical deposition method, etc. More specifically, examples of the vapor phase method include a vacuum deposition method, a sputtering method, an ion plating method, a laser ablation method, a thermal chemical vapor deposition method, a chemical vapor deposition method (CVD), a plasma chemical vapor deposition method, etc. Examples of the liquid phase method include an electrolytic plating method, an electroless plating method, etc. The thermal spraying method is a method of spraying the anode active material in a molten state or a semi-molten state onto the anode current collector 22A. The firing method is, for example, a method of applying a solution to the anode current collector 22A by a coating method, and thereafter performing a heat treatment on the solution (a coating film) at a temperature higher than a melting point of the anode binder, etc. More specific examples of the firing method include an atmosphere firing method, a reaction firing method, a hot press firing method, etc.

[Separator]

As illustrated in FIG. 2, for example, the separator 23 is interposed between the cathode 21 and the anode 22. The separator 23 allows a lithium ion to pass therethrough while preventing short-circuiting caused by contact of the two electrodes. The separator 23 includes, for example, a porous film of a synthetic resin, ceramic, etc. The separator 23 may be a laminated film in which two or more porous films are laminated on each other. Examples of the synthetic resin include polyethylene, etc.

In particular, the separator 23 may include, for example, the above-described porous film (a base layer) and a polymer compound layer provided on the base layer. The polymer compound layer may be provided on only one side of the base layer, or may be provided on both sides of the base layer, for example. One reason for this is that adhesiveness

of the separator 23 to each of the cathode 21 and the anode 22 improves, which makes it more difficult for the spirally-wound electrode body 20 to be distorted. Accordingly, a decomposition reaction of the electrolytic solution is suppressed, and leakage of the electrolytic solution with which the base layer is impregnated is also suppressed. Therefore, even when charge and discharge are repeated, it is more difficult for electrical resistance of the lithium ion secondary battery to rise, and it is more difficult for the lithium ion secondary battery to swell.

The polymer compound layer contains, for example, a polymer compound such as polyvinylidene fluoride. One reason for this is that it is superior in physical strength and is electrochemically stable. It is to be noted that the polymer compound layer may contain an insulating particle such as an inorganic particle, for example. One reason for this is that safety improves. The inorganic particle is not particularly limited in its type; however, the inorganic particle is, for example, aluminum oxide, aluminum nitride, etc.

[Electrolytic Solution]

As described above, the spirally-wound electrode body 20 is impregnated with the electrolytic solution. For this reason, for example, the separator 23 is impregnated with the electrolytic solution and each of the cathode 21 and the anode 22 is impregnated with the electrolytic solution.

The electrolytic solution contains a solvent and an electrolyte salt. It is to be noted that the electrolytic solution may further contain various additives, for example.

(Solvent)

The solvent contains, for example, a non-aqueous solvent (an organic solvent). The electrolytic solution containing the non-aqueous solvent is a so-called non-aqueous electrolytic solution. Examples of the non-aqueous solvent include cyclic carbonate ester, chain carbonate ester, chain carboxylate ester, lactone, a nitrile (mononitrile) compound, etc. One reason for this is that it is possible to obtain a superior battery capacity, a superior cycle characteristic, a superior storage characteristic, etc.

Examples of the cyclic carbonate ester include ethylene carbonate, propylene carbonate, butylene carbonate, etc. Examples of the chain carbonate ester include dimethyl carbonate, diethyl carbonate, ethyl methyl carbonate, methylpropyl carbonate, etc. Examples of the chain carboxylate ester include methyl acetate, ethyl acetate, methyl propionate, ethyl propionate, propyl propionate, methyl butyrate, methyl isobutyrate, methyl trimethylacetate, ethyl trimethylacetate, etc. Examples of the lactone include $\gamma$-butyrolactone, $\gamma$-valerolactone, etc. Examples of the nitrile compound include acetonitrile, methoxyacetonitrile, 3-methoxypropionitrile, etc.

Further, examples of the non-aqueous solvent include 1,2-dimethoxyethane, tetrahydrofuran, 2-methyltetrahydrofuran, tetrahydropyran, 1,3-dioxolane, 4-methyl-1,3-dioxolane, 1,3-dioxane, 1,4-dioxane, N,N-dimethylformamide, N-methylpyrrolidinone, N-methyloxazolidinone, N,N'-dimethylimidazolidinone, nitromethane, nitroethane, sulfolane, dimethylsulfoxide, etc. One reason for this is that it is possible to obtain a similar advantage.

Other than the above, the non-aqueous solvent may be unsaturated cyclic carbonate ester, halogenated carbonate ester, sulfonate ester, acid anhydride, a polyvalent nitrile compound, a diisocyanate compound, phosphate ester, etc. One reason for this is that chemical stability of the electrolytic solution improves.

Examples of the unsaturated cyclic carbonate ester include vinylene carbonate (1,3-dioxol-2-one), vinylethylene carbonate (4-vinyl-1,3-dioxolane-2-one), methylene ethylene carbonate (4-methylene-1,3-dioxolane-2-one), etc. Examples of the halogenated carbonate ester include 4-fluoro-1,3-dioxolan-2-one, 4,5-difluoro-1,3-dioxolan-2-one, fluoromethylmethylcarbonate, bis(fluoromethyl)carbonate, difluoromethylmethylcarbonate, etc. Examples of the sulfonate ester include 1,3-propane sulton, 1,3-propene sulton, etc. Examples of the acid anhydride include succinic anhydride, ethanedisulfonic anhydride, sulfobenzoic anhydride, etc. Examples of the polyvalent nitrile compound include succinonitrile, etc. Examples of the diisocyanate compound include $OCN-C_6H_{12}-NCO$, etc. Examples of the phosphate ester include trimethyl phosphate, etc.

(Electrolyte Salt)

The electrolyte salt is, for example, a lithium salt. It is to be noted that the electrolyte salt may further contain, for example, a salt other than the lithium salt. Examples of the other salts include a salt of light metal other than lithium.

Examples of the lithium salt include lithium hexafluorophosphate ($LiPF_6$), lithium tetrafluoroborate ($LiBF_4$), bis(fluorosulfonyl)amidolithium ($LiN(SO_2F)_2$), bis(trifluoromethanesulfonyl)amidolithium ($LiN(CF_3SO_2)_2$), lithium difluorophosphate ($LiPF_2O_2$), lithium fluorophosphate ($Li_2PFO_3$), etc.

A content of the electrolyte salt is not particularly limited; however, the content of the electrolyte salt is, for example, from 0.3 mol/kg to 3.0 mol/kg with respect to the solvent.

<2-2. Operation>

The lithium ion secondary battery operates as follows, for example. At the time of charge, lithium ions are extracted from the cathode 21, and the lithium ions are inserted in the anode 22 via the electrolytic solution. At the time of discharge, lithium ions are extracted from the anode 22, and the lithium ions are inserted in the cathode 21 via the electrolytic solution.

<2-3. Manufacturing Method>

The lithium ion secondary battery is manufactured by, for example, the following procedure.

[Fabrication of Cathode]

First, a cathode active material is mixed with a cathode binder, a cathode conductive agent, etc. on an as-needed basis to provide a cathode mixture. Thereafter, the cathode mixture is dispersed or dissolved in an organic solvent, etc. to obtain a paste-like cathode mixture slurry. Lastly, after the cathode mixture slurry is applied to both surfaces of the cathode current collector 21A, the cathode mixture slurry is dried to form the cathode active material layer 21B. Thereafter, the cathode active material layer 21B may be compression-molded by using a roll press machine, etc. In this case, the cathode active material layer 21B may be heated, or compression molding may be repeated a plurality of times.

[Fabrication of Anode]

The anode active material layers 22B are formed on both surfaces of the anode current collector 22A by a procedure similar to the fabrication procedure of the cathode 21 described above. Specifically, an anode active material containing the cyclic compound is mixed with an anode binder, an anode conductive agent, etc., on an as-needed basis to provide an anode mixture. Thereafter, the anode mixture is dispersed in an organic solvent, etc. to obtain a paste-like anode mixture slurry. Thereafter, the anode mixture slurry is applied to both surfaces of the anode current collector 22A, and thereafter, the anode mixture slurry is dried. The anode active material layer 22B is thereby formed. As a result, the anode 22 is fabricated. Thereafter, the anode active material layer 22B may be compression-molded.

[Preparation of Electrolytic Solution]

After adding the electrolyte salt to the solvent, the solvent is stirred. The electrolyte salt is thereby dissolved. As a result, the electrolytic solution is prepared.

[Assembly of Lithium Ion Secondary Battery]

First, the cathode lead 25 is coupled to the cathode current collector 21A by a welding method, etc., and the anode lead 26 is coupled to the anode current collector 22A by a welding method, etc. Thereafter, the cathode 21 and the anode 22 are stacked on each other with the separator 23 interposed therebetween. Thereafter, the cathode 21, the anode 22, and the separator 23 are spirally wound to form a spirally-wound body. Thereafter, the center pin 24 is inserted into the space 20C provided at the spirally-winding center of the spirally-wound body.

Thereafter, in a state in which the spirally-wound body is sandwiched between the pair of insulating plates 12 and 13, the spirally-wound body is accommodated inside the battery can 11 together with the insulating plates 12 and 13. In this case, the cathode lead 25 is coupled to the safety valve mechanism 15 by a welding method, etc., and the anode lead 26 is coupled to the battery can 11 by a welding method, etc. Thereafter, the electrolytic solution is injected into the battery can 11 to impregnate the spirally-wound body with the electrolytic solution. Each of the cathode 21, the anode 22, and the separator 23 is thereby impregnated with the electrolytic solution. As a result, the spirally-wound electrode body 20 is formed.

Lastly, the open end of the battery can 11 is swaged with the gasket 17. The battery cover 14, the safety valve mechanism 15, and the positive temperature coefficient device 16 are thereby attached to the open end of the battery can 11. The spirally-wound electrode body 20 is thereby sealed inside the battery can 11. As a result, the lithium ion secondary battery is completed.

<2-4. Workings and Effects>

According to the cylindrical-type lithium ion secondary battery, the anode 22 contains the cyclic compound. In

this case, it is easier for the anode 22 to insert and extract lithium. In addition, expansion and contraction of the anode active material layer 22B at the times of charge and discharge are suppressed, and the potential of the anode 22 is made higher. As a result, it is possible to obtain a superior battery characteristic.

In particular, when the anode 22 contains the carbon material, the metal-based material, or both together with the cyclic compound, and the weight ratio thereof is from 0.01 to 0.99, it is possible to obtain a high battery capacity while the expansion and contraction of the anode active material layer 22B at the times of charge and discharge are sufficiently suppressed. As a result, it is possible to obtain a higher effect.

One reason is.

Other than the above, according to the anode 22 to be used in the cylindrical-type lithium ion secondary battery, the cyclic compound is included. Accordingly, it is possible to improve the battery characteristic of the lithium ion secondary battery for the above-described reasons.

It is to be noted that other workings and other effects related to each of the cylindrical-type lithium ion secondary battery and the anode 22 are similar to the other workings and the other effects related to the cyclic compound described above.

<3. Lithium Ion Secondary Battery and Anode for Lithium Ion Secondary Battery (Laminated Film Type)>

Next, description is given of another lithium ion secondary battery and another anode. In the description below, the components of the cylindrical-type lithium ion secondary battery that have been already described (see FIGs. 1 and 2) will be referred to where appropriate.

FIG. 3 illustrates a perspective configuration of another lithium ion secondary battery, and FIG. 4 enlarges a cross-sectional configuration of a main part (a spirally-wound electrode body 30) of the lithium ion secondary battery taken along a IV-IV line illustrated in FIG. 3. It is to be noted that FIG. 4 illustrates a state in which the spirally-wound electrode body 30 and an outer package member 40 are separated from each other.

<3-1. Configuration>

As illustrated in FIG. 4, the lithium ion secondary battery is, for example, a lithium ion secondary battery of a laminated film type in which a battery device (the spirally-wound electrode body 30) is accommodated inside the film-like outer package member 40 having pliability (or flexibility).

The spirally-wound electrode body 30 is, for example, a structure formed by stacking a cathode 33 and an anode 34 with a separator 35 and an electrolyte layer 36 interposed therebetween, and thereafter sprially winding the cathode 33, the anode 34, the separator 35, and the electrolyte layer 36. A surface of the spirally-wound electrode body 30 is protected by, for example, a protective tape 37. The electrolyte layer 36 is interposed between, for example, the cathode 33 and the separator 35, and is interposed between the anode 34 and the separator 35.

A cathode lead 31 is coupled to the cathode 33. The cathode lead 31 is led out from inside toward outside of the outer package member 40. A material for forming the cathode lead 31 is, for example, similar to the material for forming the cathode lead 25. A shape of the cathode lead 31 is, for example, a thin plate shape, a mesh shape, etc.

An anode lead 32 is coupled to the anode 34. The anode lead 32 is led out from inside toward outside of the outer package member 40. A lead-out direction of the anode lead 32 is, for example, the same as a lead-out direction of the cathode lead 31. A material for forming the anode lead 32 is, for example, similar to the material for forming the anode lead 26. A shape of the anode lead 32 is, for example, similar to the shape of the cathode lead 31.

[Outer Package Member]

The outer package member 40 is, for example, a single film that is foldable in a direction of an arrow R illustrated in FIG. 3. For example, a depression 40U directed to accommodating the spirally-wound electrode body 30 is provided in a portion of the outer package member 40.

The outer package member 40 is, for example, a laminate (a laminated film) in which a fusion bonding layer, a metal layer, and a surface protection layer are laminated in this order from the inside toward the outside. In a manufacturing process of the lithium ion secondary battery, for example, the outer package member 40 is so folded that the fusion bonding layers are opposed to each other with the spirally-wound electrode body 30 interposed therebetween, and thereafter, outer peripheral edges of the fusion bonding layers are fusion bonded to each other. The fusion bonding layer is, for example, a film containing a polymer compound such as polypropylene. The metal layer is, for example, a metal foil containing a metal material such as aluminum. The surface protection layer is, for example, a film containing a polymer compound such as nylon. It is to be noted that the outer package member 40 includes, for example, two

laminated films. The two laminated films may be bonded to each other with an adhesive in between, for example.

An adhesive film 41 is inserted between the outer package member 40 and the cathode lead 31, for example, in order to prevent entry of outside air. The adhesive film 41 includes a material having adhesion with respect to the cathode lead 31. The above-described material is, for example, a polyolefin resin such as polypropylene.

For example, an adhesive film 42 is inserted between the outer package member 40 and the anode lead 32. The adhesive film 42 has a function similar to that of the adhesive film 41. A material for forming the adhesive film 42 is similar to the material for forming the adhesive film 41 except that it has adhesion with respect to the anode lead 32 instead of the cathode lead 31.

[Cathode, Anode, and Separator]

The cathode 33 includes, for example, a cathode current collector 33A and a cathode active material layer 33B, and the anode 34 includes, for example, an anode current collector 34A and an anode active material layer 34B. Configurations of the cathode current collector 33A, the cathode active material layer 33B, the anode current collector 34A, and the anode active material layer 34B are, for example, similar to the configurations of the cathode current collector 21A, the cathode active material layer 21B, the anode current collector 22A, and the anode active material layer 22B, respectively. That is, the anode 34 contains the cyclic compound. More specifically, the anode 34 contains one or more of the first cyclic compound, the second cyclic compound, the third cyclic compound, the fourth cyclic compound, the fifth cyclic compound, and the sixth cyclic compound. Further, a configuration of the separator 35 is, for example, similar to that of the separator 23.

[Electrolyte Layer]

The electrolyte layer 36 contains a polymer compound together with an electrolytic solution. Since the electrolyte layer 36 described here is a so-called gel electrolyte, the electrolytic solution is held by the polymer compound in the electrolyte layer 36. One reason for this is that it is possible to obtain high ionic conductivity (for example, 1 mS/cm or more at room temperature) and leakage of the electrolytic solution is prevented. It is to be noted that the electrolyte layer 36 may further include other materials such as various additives, for example.

(Electrolytic Solution and Polymer Compound)

A configuration of the electrolytic solution is similar to that of the electrolytic solution to be used in the cylindrical-type secondary battery. The polymer compound may be, for example, a homopolymer, a copolymer, or both. Examples of the homopolymer include polyvinylidene fluoride, etc. and examples of the copolymer include a copolymer of vinylidene fluoride and hexafluoropyrene, etc.

In the electrolyte layer 36 which is a gel electrolyte, a solvent contained in the electrolytic solution is a broad concept encompassing not only a liquid material but also a material having ionic conductivity capable of dissociating the electrolyte salt. Therefore, in a case where a polymer compound having ionic conductivity is used, the polymer compound is also included in the solvent.

[Use of Electrolytic Solution]

It is to be noted that the electrolytic solution may be used as it is instead of the electrolyte layer 36. In this case, the spirally-wound electrode body 30 (the cathode 33, the anode 34, and the separator 35) is impregnated with the electrolytic solution.

<3-2. Operation>

The lithium ion secondary battery operates as follows, for example. At the time of charge, lithium ions are extracted from the cathode 33, and the lithium ions are inserted in the anode 34 via the electrolyte layer 36. At the time of discharge, lithium ions are extracted from the anode 34, and the lithium ions are inserted in the cathode 33 via the electrolyte layer 36.

<3-3. Manufacturing Method>

The lithium ion secondary battery including the electrolyte layer 36 is manufactured by, for example, three procedures described below.

[First Procedure]

First, the cathode 33 is fabricated by a procedure similar to the procedure of fabricating the cathode 21, and the anode 34 is fabricated by a procedure similar to the procedure of fabricating the anode 22. In other words, in the case of fabricating the cathode 33, the cathode active material layers 33B are formed on both surfaces of the cathode current collector 33A, and in the case of fabricating the anode 34, the anode active material layers 34B are formed on both surfaces of the anode current collector 34A.

Thereafter, the electrolytic solution is prepared by a procedure similar to that of the method of preparing the electrolytic solution used in the cylindrical-type secondary battery. Thereafter, the electrolytic solution, the polymer compound, the organic solvent, etc. are mixed, and the mixture is stirred to prepare a precursor solution. Thereafter, the precursor solution is applied to the cathode 33. Thereafter, the precursor solution is dried to form the electrolyte layer 36. The precursor solution is also applied to the anode 34. Thereafter, the precursor solution is dried to form the electrolyte layer 36. Thereafter, the cathode lead 31 is coupled to the cathode current collector 33A by a welding method, etc., and the anode lead 32 is coupled to the anode current collector 34A by a welding method, etc. Thereafter, the cathode 33 and the anode 34 are stacked on each other with the separator 35 interposed therebetween. Thereafter, the cathode 33, the anode 34, and the separator 35 are spirally wound to form the spirally-wound electrode body 30. Thereafter, the protective tape 37 is attached to the surface of the spirally-wound electrode body 30.

Lastly, the outer package member 40 is so folded as to sandwich the spirally-wound electrode body 30, and thereafter, outer peripheral edges of the outer package member 40 are bonded to each other by using a thermal fusion method, etc. In this case, the adhesive film 41 is inserted between the cathode lead 31 and the outer package member 40, and the adhesive film 42 is inserted between the anode lead 32 and the outer package member 40. The spirally-wound electrode body 30 is thereby sealed inside the outer package member 40. As a result, the lithium ion secondary battery is completed.

[Second Procedure]

First, the cathode 33 and the anode 34 are fabricated. Thereafter, the cathode lead 31 is coupled to the cathode 33, and the anode lead 32 is coupled to the anode 34. Thereafter, the cathode 33 and the anode 34 are stacked on each other with the separator 35 interposed therebetween. Thereafter, the cathode 33, the anode 34, and the separator 35 are spirally wound to form a spirally-wound body. Thereafter, the protective tape 37 is attached to a surface of the spirally-wound body. Thereafter, the outer package member 40 is so folded as to sandwich the spirally-wound body. Thereafter, outer peripheral edges except for one side of the outer package member 40 are bonded to each other by using a thermal fusion bonding method, etc. to accommodate the spirally-wound body inside the pouch-shaped outer package member 40.

Thereafter, an electrolytic solution, a monomer as a raw material of a polymer compound, a polymerization initiator, and other materials such as a polymerization inhibitor as necessary are mixed. Thereafter, the mixture is stirred to prepare a composition for electrolyte. Thereafter, the composition for electrolyte is injected into the pouch-shaped outer package member 40. Thereafter, the outer package member 40 is sealed by a thermal fusion bonding method, etc. Lastly, the monomers are thermally polymerized to form a polymer compound. This causes the electrolytic solution to be held by the polymer compound. The electrolyte layer 36 is thereby formed. The spirally-wound electrode body 30 is thereby sealed inside the outer package member 40. As a result, the lithium ion secondary battery is completed.

[Third Procedure]

First, a spirally-wound body is fabricated by a procedure similar to the above-described second procedure except that the separator 35 in which the polymer compound layer is formed on the base layer is used. Thereafter, the spirally-wound body is accommodated inside the pouch-shaped outer package member 40. Thereafter, the electrolytic solution is injected into the outer package member 40. Thereafter, an opening of the outer package member 40 is sealed using a thermal fusion bonding method, etc. Lastly, the separator 35 is brought into adhesion with each of the cathode 33 and the anode 34 with the polymer compound layer interposed therebetween by heating the outer package member 40 while applying a weight to the outer package member 40. The polymer compound layer impregnated with the electrolytic solution is gelled thereby. The electrolyte layer 36 is thereby formed. The spirally-wound electrode body 30 is thereby sealed inside the outer package member 40. As a result, the lithium ion secondary battery is completed.

In the third procedure, it is more difficult for the lithium ion secondary battery to swell as compared with the first procedure. Further, in the third procedure, compared with the second procedure, it is more difficult for the solvent and the monomer (the raw material of the polymer compound) to remain in the electrolyte layer 36. Therefore, each of the cathode 33, the anode 34, and the separator 35 is sufficiently adhered to the electrolyte layer 36.

<3-4. Workings and Effects>

According to the lithium ion secondary battery of the laminated film type, the anode 34 contains the cyclic compound. Accordingly, it is possible to obtain a superior battery characteristic for a reason similar to that of the case described related to the lithium ion secondary battery of the cylindrical type. Further, according to the anode 34, the cyclic compound is included. Accordingly, it is possible to improve the battery characteristic of the lithium ion secondary battery.

It is to be noted that other workings and effects of the laminated-film-type lithium ion secondary battery are similar to the other workings and effects of the cylindrical-type lithium ion secondary battery.

<4. Applications of Cyclic Compound>

An application of the cyclic compound is not particularly limited; however, the cyclic compound is applicable to an electrochemical device that utilizes the insertion and extraction phenomenon of the electrode reaction material, etc., as described above. The electrochemical device is not particularly limited in its type; however, may be a capacitor, etc., in addition to the lithium ion secondary battery described above, for example. It is to be noted that the cyclic compound is not limitedly applied to the lithium ion secondary battery that uses lithium as the electrode reaction material and may be applied to another secondary battery that uses an electrode reaction material other than lithium. Further, the cyclic compound may be applied to an application other than the electrochemical device.

<5. Applications of Lithium Ion Secondary Battery and Anode for Lithium Ion Secondary Battery>

An application of the lithium ion secondary battery is as described below, for example. It is to be noted that, since an application of the anode is the same as the application of the lithium ion secondary battery, the application of the anode will be described together below. It is to be noted that the anode may be applied to a secondary battery other than the lithium ion secondary battery, may be applied to an electrochemical device other than the secondary battery, and may be applied to an application other than the electrochemical device.

The application of the lithium ion secondary battery is not particularly limited as long as it is a machine, a device, a tool, an apparatus, a system (an assembly of a plurality of devices and the like), or the like that is able to utilize the lithium ion secondary battery as a power source for driving, a power storage source for power accumulation, etc. The lithium ion secondary battery used as the power source may be a main power source or an auxiliary power source. The main power source is a power source which is preferentially used regardless of presence or absence of other power sources. The auxiliary power source may be, for example, a power source used instead of the main power source, or may be a power source switched from the main power source on an as-needed basis. In a case where the lithium ion secondary battery is used as the auxiliary power source, a type of the main power source is not limited to the lithium ion secondary battery.

The application of the lithium ion secondary battery is as follows, for example. It is an electronic apparatus (including a portable electronic apparatus) such as a video camera, a digital still camera, a mobile phone, a laptop personal computer, a cordless phone, a headphone stereo, a portable radio, a portable television, or a portable information terminal. It is a portable life appliance such as an electric shaver. It is a storage apparatus such as a backup power source or a memory card. It is an electric tool such as an electric drill or an electric saw. It is a battery pack to be mounted on a laptop personal computer, etc. as an attachable and detachable power source. It is a medical electronic apparatus such as a pacemaker or a hearing aid. It is an electric vehicle such as an electric automobile (including a hybrid automobile). It is an electric power storage system such as a household battery system that stores electric power in preparation for an emergency. It is needless to say that the application of the lithium ion secondary battery may be another application other than the applications described above.

## Working Examples

Working examples of the present technology are described below. It is to be noted that the description is given in the following order.

1. Cyclic Compound

    1-1. Evaluation of Cyclic Compound
    1-2. Discussion
    1-3. Conclusion

2. Lithium Ion Secondary Battery

2-1. Fabrication of Lithium Ion Secondary Battery
2-2. Evaluation of Lithium Ion Secondary Battery
2-3. Discussion
2-4. Conclusion

<1. Cyclic Compound>

First, after the cyclic compound was synthesized, a physical property of the cyclic compound was evaluated. A procedure of synthesizing the cyclic compound is as described above.

<1-1. Evaluation of Cyclic Compound>

The physical property (an electrical conduction characteristic) of the cyclic compound was evaluated, and results described in Table 1 were obtained.

In a case of examining the electrical conduction characteristic, first, an active material (the cyclic compound), a conductive agent (graphite), and a binder (polyvinylidene fluoride) were mixed to form a mixture. In this case, a mixture ratio (a weight ratio) was the cyclic compound : the conductive agent : the binder = 85: 5: 10. Thereafter, the mixture was put into an organic solvent (N-methyl-2-pyrrolidone), and thereafter, the organic solvent was stirred to obtain a slurry. Thereafter, after the slurry was applied to a surface of a current collector (a copper foil, thickness = 10 μm), the current collector to which the slurry was applied was dried (drying time=15 minutes) in an oven (temperature = 80° C), whereby an active material layer containing the active material was formed. In this case, a texture amount of the active material layer after being dried was 7.0 $mg/cm^2$, and a volume density of the active material layer was 1.3 $g/cm^3$. As a result, a test electrode including the current collector and the active material layer was obtained.

Types of the cyclic compounds are as described in Table 1. Specifically, as the cyclic compound, a compound represented by each of a formula (3-4) and a formula (3-5) was used and a compound represented by each of a formula (4-25) and a formula (5-13) was used. The compound represented by the formula (4-25) is a compound, of the compound represented by the formula (4-2), in which each of Yll to Y14 in the formula (4) is changed from chlorine to fluorine. The compound represented by the formula (5-13) is a compound, of the compound represented by the formula (5-7), in which each of Y15 to Y20 in the formula (5) is changed from chlorine to fluorine.

It is to be noted that, for comparison, a test electrode was fabricated by a similar procedure except that other publicly-known cyclic compound was used instead of the cyclic compound. As the other cyclic compound, a compound represented by each of formulae (11-1) to (11-3) was used.

[Chem. 23]

Chem. 23

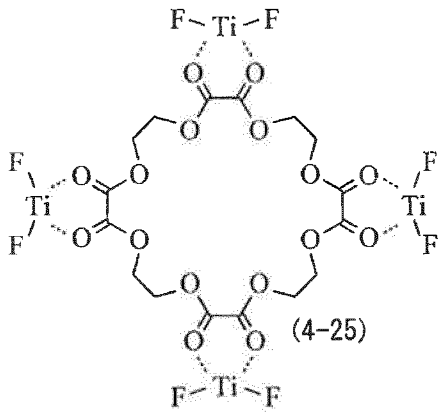

(4-25)

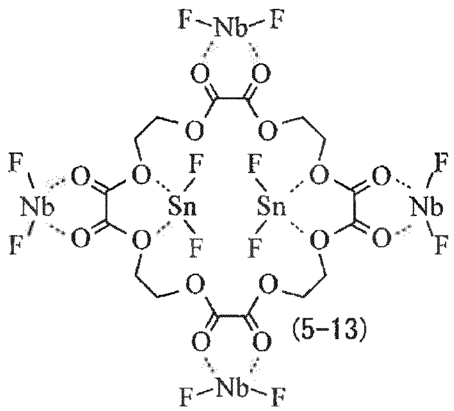

(5-13)

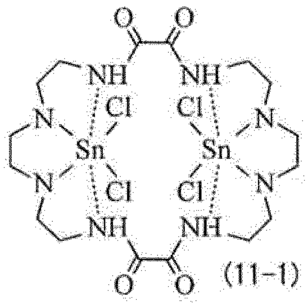

(11-1)

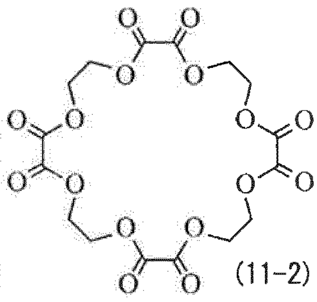

(11-2)

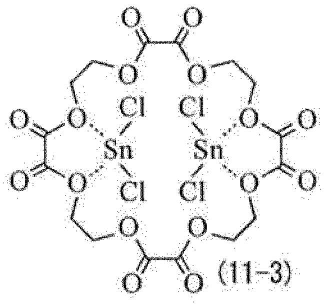

(11-3)

Thereafter, electric resistance (S/cm) of the test electrode was measured by conducting a four-terminal electric conductivity measurement (terminal diameter = 500 μm, distance between terminals = 1mm, current = 10 mA) with the use of an electric resistance measurement device (resistance meter RM3000 available from Jandel Engineering Ltd.) In this case, in order to measure the electrical resistance over a wide range without locally measuring the electrical resistance, the electrical resistance was measured at three points sufficiently distant from each other, and an average value of the electrical resistance measured at the three points was calculated thereby.

[Table 1]

Table 1

| Experimental example | Cyclic compound | Other cyclic compound | Electrical resistance (S/cm) |
|---|---|---|---|
| 1-1 | Formula (3-4) | - | 16.7 |
| 1-2 | Formula (3-5) | - | 10.1 |
| 1-3 | Formula (4-25) | - | 5.2 |
| 1-4 | Formula (5-13) | - | 9.1 |
| 1-5 | - | Formula (11-1) | 1.9 |
| 1-6 | - | Formula (11-2) | 3.4 |
| 1-7 | - | Formula (11-3) | 2.7 |

<1-2. Discussion>

In a case where the cyclic compound was used (Experimental examples 1-1 to 1-4), sufficiently-low electric resistance was obtained as with a case where the other publicly-known cyclic compound was used (Experimental

examples 1-5 to 1-7).

<1-3. Conclusion>

From the above, the cyclic compound resulted in sufficiently-low electrical resistance. Accordingly, a superior electrical conduction characteristic was obtained.

<2. Lithium Ion Secondary Battery>

Next, after a test lithium ion secondary battery was fabricated with the use of the above-described cyclic compound, battery characteristics of the lithium ion secondary battery were evaluated.

<2-1. Fabrication of Lithium Ion Secondary Battery>

FIG. 5 illustrates a cross-sectional configuration of the test secondary battery. The secondary battery is a coin-type lithium ion secondary battery in which a test electrode 51 and a counter electrode 52 are stacked on each other with a separator 53 interposed therebetween, and an outer package can 54 accommodating the test electrode 51 and an outer package cup 55 accommodating the counter electrode 52 are attached to each other by being swaged with a gasket 56.

[Fabrication of Test Electrode]

In a case of fabricating the test electrode 51, first, 95 parts by mass of an anode active material and 5 parts by mass of an anode binder (polyvinylidene fluoride) were mixed to obtain an anode mixture. Thereafter, the anode mixture was put into an organic solvent (N-methyl-2-pyrrolidone). Thereafter, the organic solvent was stirred to obtain a paste-like anode mixture slurry. Thereafter, the anode mixture slurry was applied to both surfaces of an anode current collector (a copper foil, thickness = 8 μm) using a coating apparatus. Thereafter, the anode mixture slurry was dried to form the anode active material layer. Lastly, the anode active material layer was compression-molded using a roll press machine.

As the anode active material, the carbon material and the metal-based material were used together with the above-described cyclic compound and the other cyclic compounds. A type and a composition (a weight ratio) of the anode active material are as described in Table 2. Graphite (Gr) was used as the carbon material, and silicon (Si), tin (Sn), and titanium oxide ($TiO_2$) were used as the metal-based material.

In this case, two types of anode active materials were mixed on an as-needed basis. A weight ratio in a case where the cyclic compound and the carbon material are used is a weight ratio of the cyclic compound to the cyclic compound and the carbon material. A weight ratio in a case where the cyclic compound and the metal-based material are used is a weight ratio of the cyclic compound to the cyclic compound and the metal-based material. A weight ratio in a case where the carbon material and the metal-based material are used is a weight ratio of the metal-based material to the carbon material and the metal-based material. A weight ratio in a case where the carbon material and the other cyclic compound are used is a weight ratio of the other cyclic compound to the carbon materials and the other cyclic compound. A weight ratio in a case where the metal-based material and the other cyclic compound are used is a weight ratio of the other cyclic compound to the metal-based material and the other cyclic compound.

[Preparation of Electrolytic Solution]

In a case of preparing the electrolytic solution, an electrolyte salt (lithium hexafluorophosphate) was added to a solvent (ethylene carbonate and diethyl carbonate). Thereafter, the solvent was stirred to dissolve the electrolyte salt. In this case, a mixture ratio (a weight ratio) of the solvent was ethylene carbonate : diethyl carbonate = 30 : 70, and a content of the electrolyte salt was 1 mol/kg with respect to the solvent.

[Assembly of Secondary Battery]

In a case of assembling the secondary battery, the test electrode 51 was punched into a pellet shape. Thereafter, the cathode 51 was accommodated inside the outer package can 54. Thereafter, the counter electrode 52 (a lithium metal plate, thickness = 100 μm) was punched out into a pellet shape. Thereafter, the counter electrode 52 was accommodated inside the outer package cup 55. Thereafter, the test electrode 51 accommodated inside the outer package can 54 and the counter electrode 52 accommodated inside the outer package cup 55 were stacked on each other with the separator 53 (a porous polyolefin film, thickness = 23 μm) interposed therebetween. Thereafter, the outer package can 54 and the outer package cup 55 were attached to each other by being swaged with the gasket 56. As a result, a

coin-type lithium ion secondary battery (a battery capacity = 2.5 mAh) was completed.

<2-2. Evaluation of Lithium Ion Secondary Battery>

A battery characteristic (an electrical resistance characteristic) of the lithium ion secondary battery was evaluated, and results described in Table 2 were obtained.

In a case of examining the electrical resistance characteristic, first, the lithium ion secondary battery was charged and discharged for two cycles in an ambient temperature environment (temperature = 25°C). Thereafter, the lithium ion secondary battery was charged until a charging rate (SOC) reached 50% with respect to a discharge capacity of the second cycle. Thereafter, impedance (impedance before a high-temperature cycle: Ω) of the lithium ion secondary battery was measured by using an electrochemical measurement device (a multichannel electrochemical measurement system VPM3 available from Bio-Logic Science Instruments).

At the time of charging, constant current charge was performed at a current of 0.2 ItA until the voltage reached 0.05 V. Thereafter, constant voltage charge was performed at a voltage of 0.05 V until the current reached 0.01 ItA. At the time of discharging, constant current discharge was performed at a current of 0.2 ItA until the voltage reached 1.5 V. The value of 0.2 ItA is a current value at which the above-described battery capacity is completely discharged in five hours, and the value of 0.01 ItA is a current value at which the above-described battery capacity is completely discharged in hundred hours.

Measurement conditions of impedance were a frequency range = 1 MHz to 10 mHz, and an alternating-current amplitude (AC Amplitude) = 10 mV. The impedance at frequency = 10 Hz was thereby measured.

Thereafter, the lithium ion secondary battery was charged and discharged for fifty cycles in a high temperature environment (temperature = 45°C). Thereafter, the lithium ion secondary battery was charged until the charging rate (SOC) reached 50% with respect to the discharge capacity of the second cycle. Thereafter, impedance (impedance after the high temperature cycle: Ω) of the lithium ion secondary battery was measured. A charge and discharge condition of the lithium ion secondary battery and a measurement condition of the impedance were set similarly to those in the case where the impedance before the high temperature cycle was measured.

Lastly, an increase rate (%) of the impedance = [(impedance after high temperature cycle − impedance before high temperature cycle) / impedance before high temperature cycle] × 100 was calculated.

[Table 2]

Table 2

| Experimental example | Anode active material | | | | | Increase rate (%) |
|---|---|---|---|---|---|---|
| | Cyclic compound | Carbon material | Metal-based material | Other cyclic compound | Weight ratio | |
| 2-1 | Formula (3-4) | Gr | - | - | 0.1 | 5 |
| 2-2 | Formula (3-4) | - | Si | - | 0.1 | 67 |
| 2-3 | Formula (3-5) | Gr | - | - | 0.1 | 6 |
| 2-4 | Formula (3-5) | - | Si | - | 0.1 | 91 |
| 2-5 | Formula (4-25) | Gr | - | - | 0.1 | 4 |
| 2-6 | Formula (4-25) | - | Si | - | 0.1 | 43 |
| 2-7 | Formula (5-13) | Gr | - | - | 0.1 | 3 |

(continued)

| Experimental example | Anode active material | | | | | Increase rate (%) |
|---|---|---|---|---|---|---|
| | Cyclic compound | Carbon material | Metal-based material | Other cyclic compound | Weight ratio | |
| 2-8 | Formula (5-13) | - | Si | - | 0.1 | 61 |
| 2-9 | - | Gr | - | - | - | 23 |
| 2-10 | - | - | Si | - | - | 117 |
| 2-11 | - | Gr | Si | - | 0.1 | 33 |
| 2-12 | - | - | Sn | - | - | 69 |
| 2-13 | - | - | $TiO_2$ | - | - | 47 |
| 2-14 | - | Gr | - | Formula (11-1) | 0.1 | 17 |
| 2-15 | - | - | Si | Formula (11-1) | 0.1 | 89 |
| 2-16 | - | Gr | - | Formula (11-2) | 0.1 | 16 |
| 2-17 | - | - | Si | Formula (11-2) | 0.1 | 93 |
| 2-18 | - | Gr | - | Formula (11-3) | 0.1 | 18 |
| 2-19 | - | - | Si | Formula (11-3) | 0.1 | 73 |

<2-3. Discussion>

In a case where the cyclic compound was used as the anode active material (Experimental examples 2-1 to 2-8), an increase rate of impedance was greatly decreased, compared with a case where the cyclic compound was not used as the anode active material (Experimental examples 2-9 to 2-19).

<2-4. Conclusion>

From the above, when the anode contained the cyclic compound, it was more difficult for the impedance to increase even when the charge and the discharge were repeatedly performed. Accordingly, the electrical resistance characteristic was improved. As a result, a superior battery characteristic was obtained in the lithium ion secondary battery.

Although the present technology has been described above with reference to the embodiment and working examples, modes of the present technology are not limited to the modes described in the embodiment and the working examples, and are therefore modifiable in a variety of ways.

Specifically, although the description has been given of the cylindrical-type lithium ion secondary battery, the laminated-film-type lithium ion secondary battery, and the coin-type lithium ion secondary battery, these are non-limiting. For example, it may be another lithium ion secondary battery such as a rectangular-type lithium ion secondary battery.

Further, although the case where the battery device to be used in the lithium ion secondary battery has the spirally-wound structure has been described, this is non-limiting. For example, the battery device may have another structure such as a laminated structure.

It is to be noted that the effects described in the present description are mere examples, and the effects of the present technology are therefore not limited to the effects described in the present description. Accordingly, other effects may be obtained related to the present technology.

Further, it should be understood by those skilled in the art that various modifications, combinations, sub-combinations, and alterations may occur depending on design requirements and other factors insofar as they are within the gist of the scope of the appended claims or the scope of the equivalents thereof.

## Claims

**1.** A lithium ion secondary battery comprising:

a cathode;
an anode containing a cyclic compound, the cyclic compound containing one or more of a first cyclic compound represented by a formula (1), a second cyclic compound represented by a formula (2), a third cyclic compound represented by a formula (3), a fourth cyclic compound represented by a formula (4), a fifth cyclic compound represented by a formula (5), and a sixth cyclic compound represented by a formula (6); and
an electrolytic solution.

[Chem. 1]

Chem. 1

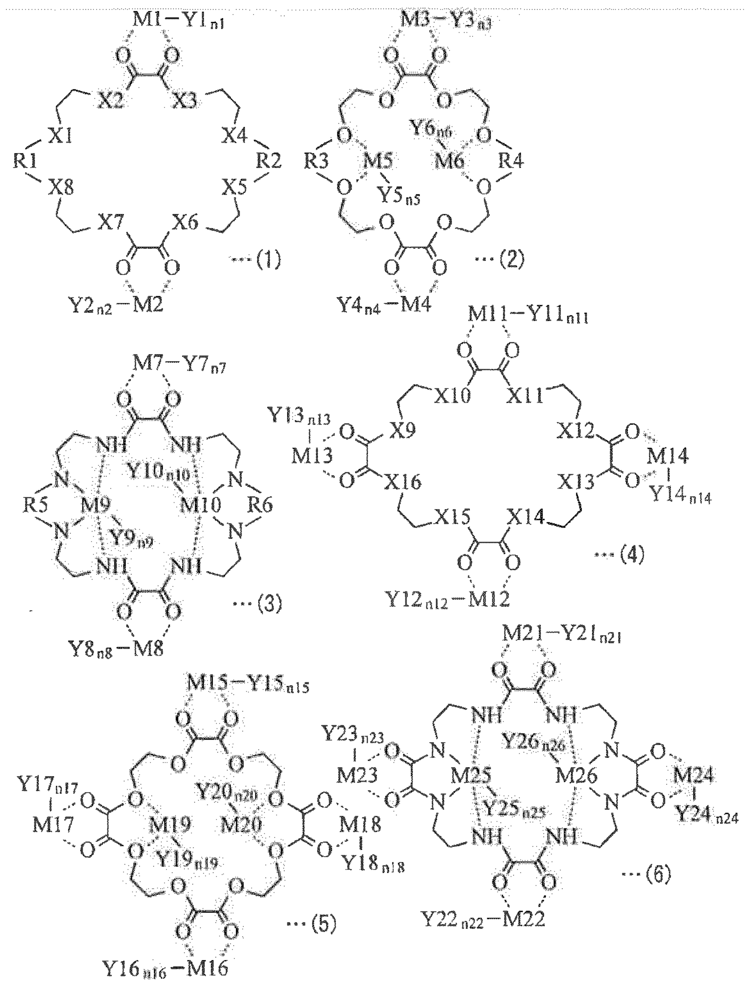

··· (1) ··· (2) ··· (3) ··· (4) ··· (5) ··· (6)

(Each of X1 to X16 is one of an oxo group (-O-) and an imino group (-NH-). Each of R1 to R6 is one of an ethylene group ($-CH_2-CH_2-$) and a dicarbonyl group (-C(=O)-C(=O)-). Each of Ml to M26 is a metal element. Each of Y1 to Y26 is a halogen element. Each of nl to n26 is an integer.)

**2.** The lithium ion secondary battery according to claim 1, wherein each of the M1 to the M26 is one of tin (Sn), titanium (Ti), silicon (Si), copper (Cu), manganese (Mn), iron (Fe), niobium (Nb), nickel (Ni), cobalt (Co), aluminum (Al), and zirconium (Zr).

**3.** The lithium ion secondary battery according to claim 1 or 2, wherein each of the Y1 to the Y26 is one of fluorine (F), chlorine (Cl), bromine (Br), and iodine (I).

**4.** The lithium ion secondary battery according to any one of claims 1 to 3, wherein
all of the X1 to the X8 are oxo groups or imino groups, and

all of the X9 to the X16 are oxo groups or imino groups.

5. The lithium ion secondary battery according to any one of claims 1 to 4, wherein
the first cyclic compound is a compound represented by the following formula (7),
the second cyclic compound is a compound represented by the following formula (8), and
the third cyclic compound is a compound represented by the following formula (9).

~~[Chem. 2]~~

Chem. 2

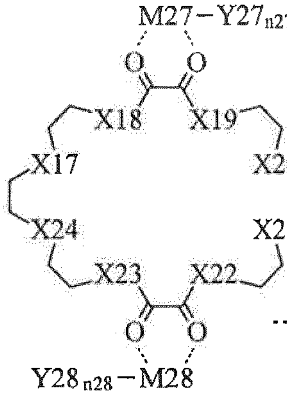

... (7)

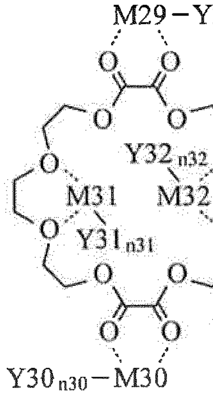

... (8)

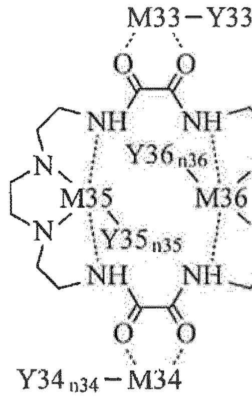

... (9)

(Each of X17 to X24 is one of an oxo group and an imino group. Each of M27 to M36 is a metal element. Each of Y27 to Y36 is a halogen element. Each of n27 to n36 is an integer.)

6. The lithium ion secondary battery according to any one of claims 1 to 5, wherein
the anode further includes a carbon material, a metal-based material, or both, and
a weight ratio of the cyclic compound to the cyclic compound, the carbon material, and the metal-based material is 0.01 or more and 0.99 or less.

7. An anode for a lithium ion secondary battery, the anode comprising a cyclic compound, the cyclic compound containing one or more of a first cyclic compound represented by a formula (1), a second cyclic compound represented by a formula (2), a third cyclic compound represented by a formula (3), a fourth cyclic compound represented by a formula (4), a fifth cyclic compound represented by a formula (5), and a sixth cyclic compound represented by a formula (6).

[Chem. 3]

Chem. 3

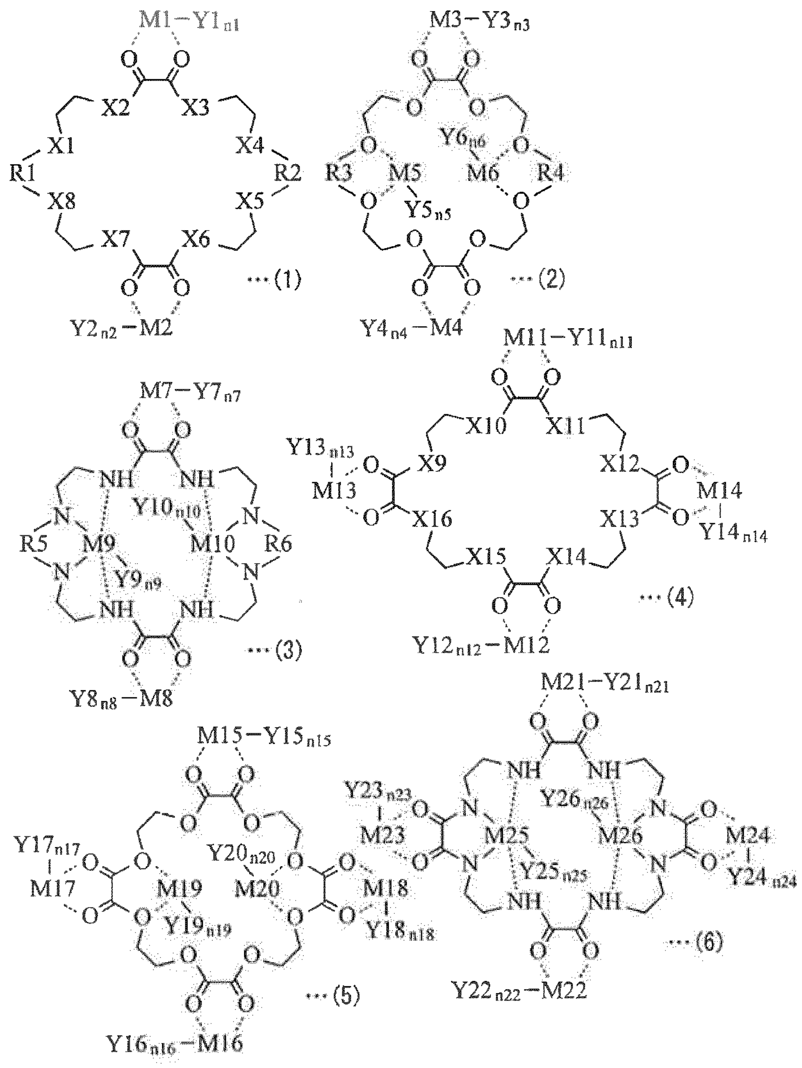

…(1) …(2) …(3) …(4) …(5) …(6)

(Each of X1 to X16 is one of an oxo group (-O-) and an imino group (-NH-). Each of R1 to R6 is one of an ethylene group ($-CH_2-CH_2-$) and a dicarbonyl group (-C(=O)-C(=O)-). Each of M1 to M26 is a metal element. Each of Y1 to Y26 is a halogen element. Each of nl to n26 is an integer.)

**8.** A cyclic compound comprising one or more of a first cyclic compound represented by a formula (1), a second cyclic compound represented by a formula (2), a third cyclic compound represented by a formula (3), a fourth cyclic compound represented by a formula (4), a fifth cyclic compound represented by a formula (5), and a sixth cyclic compound represented by a formula (6).

[Chem. 4]

Chem. 4

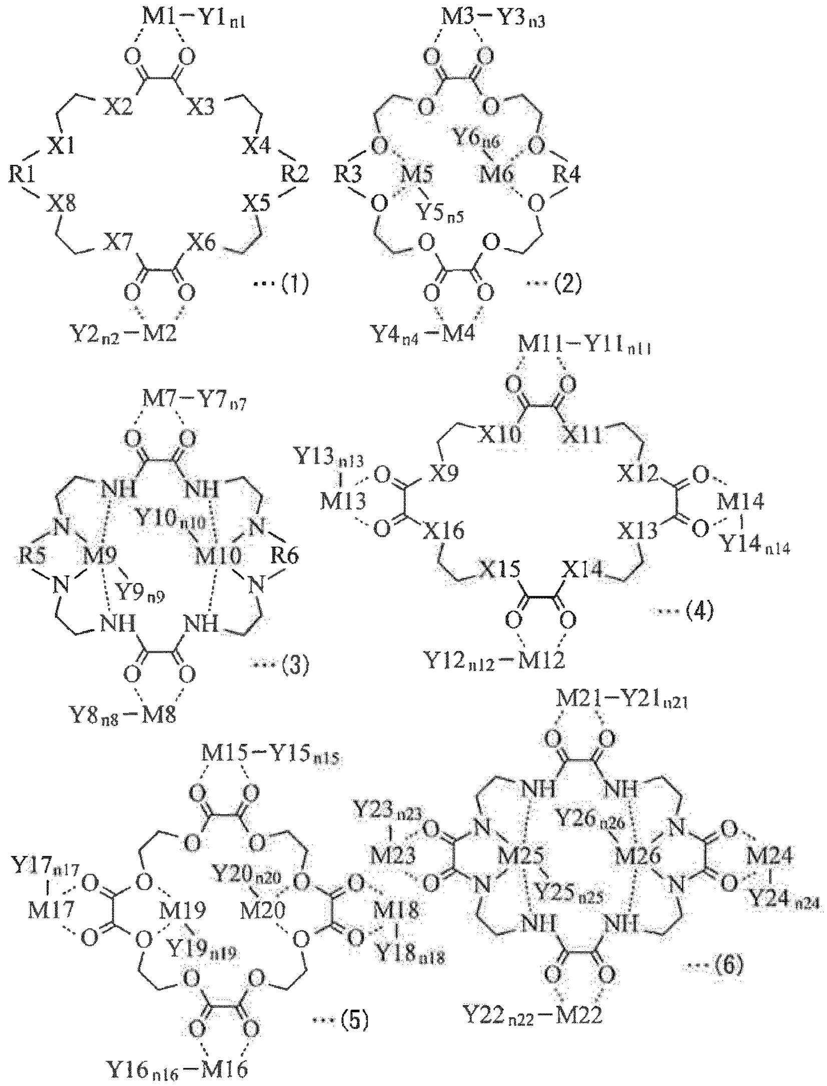

(1) (2) (3) (4) (5) (6)

(Each of X1 to X16 is one of an oxo group (-O-) and an imino group (-NH-). Each of R1 to R6 is one of an ethylene group ($-CH_2-CH_2-$) and a dicarbonyl group (-C(=O)-C(=O)-). Each of Ml to M26 is a metal element. Each of Y1 to Y26 is a halogen element. Each of n1 to n26 is an integer.)

[ FIG. 1 ]

FIG. 1

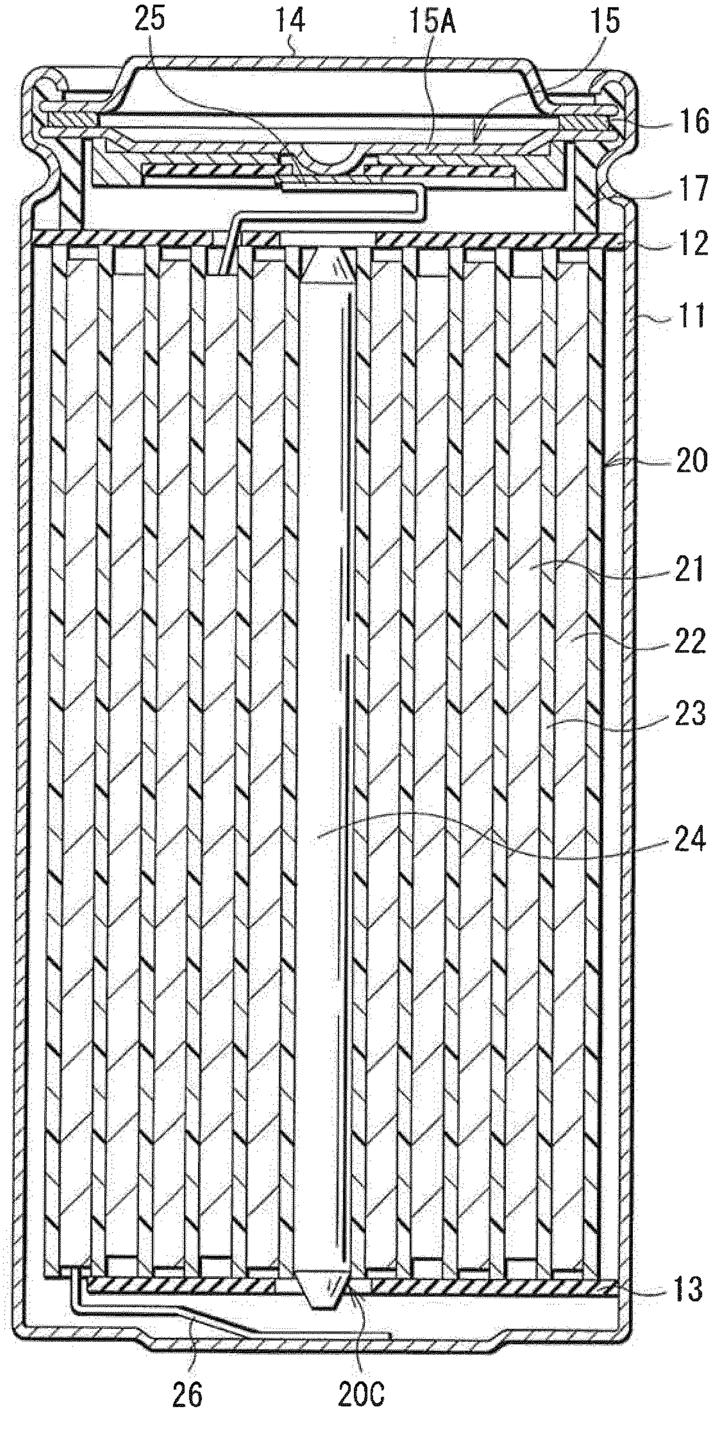

[ FIG. 2 ]

FIG. 2

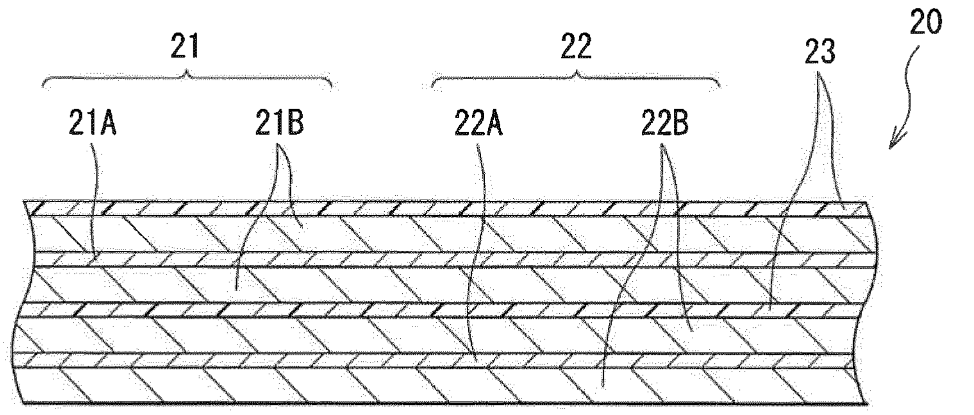

[ FIG.3 ]

FIG.3

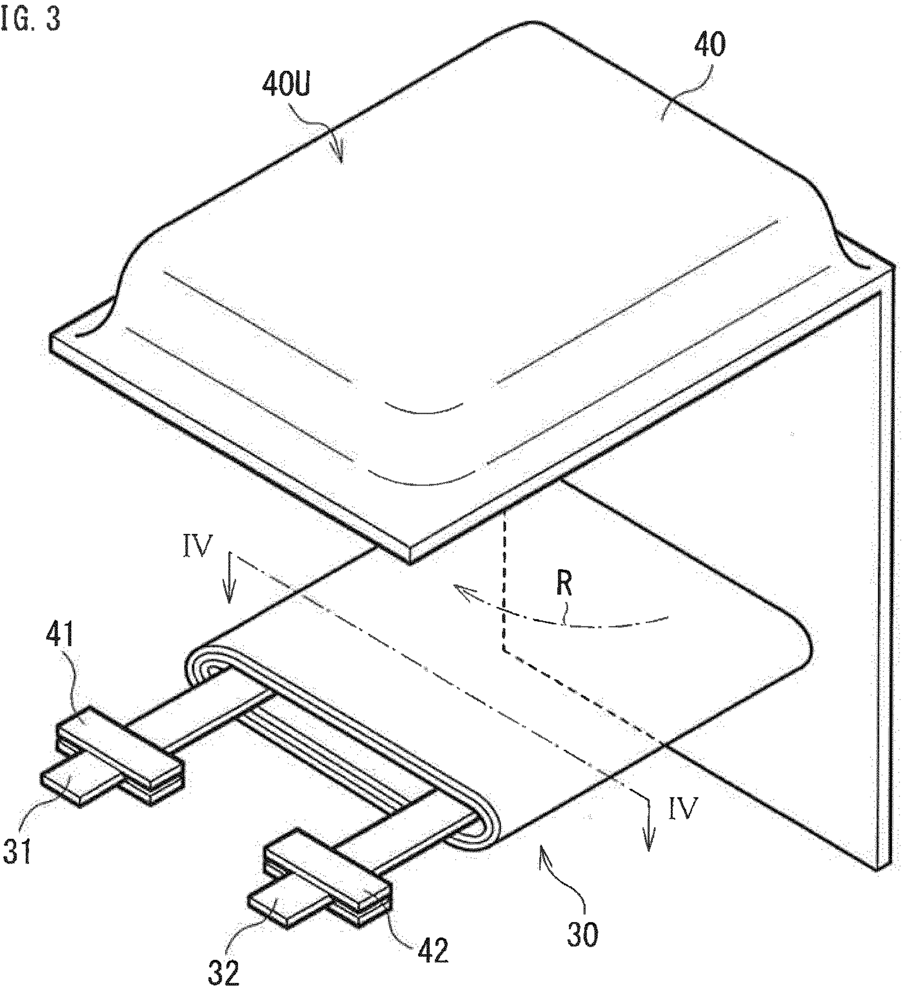

[ FIG. 4 ]

FIG. 4

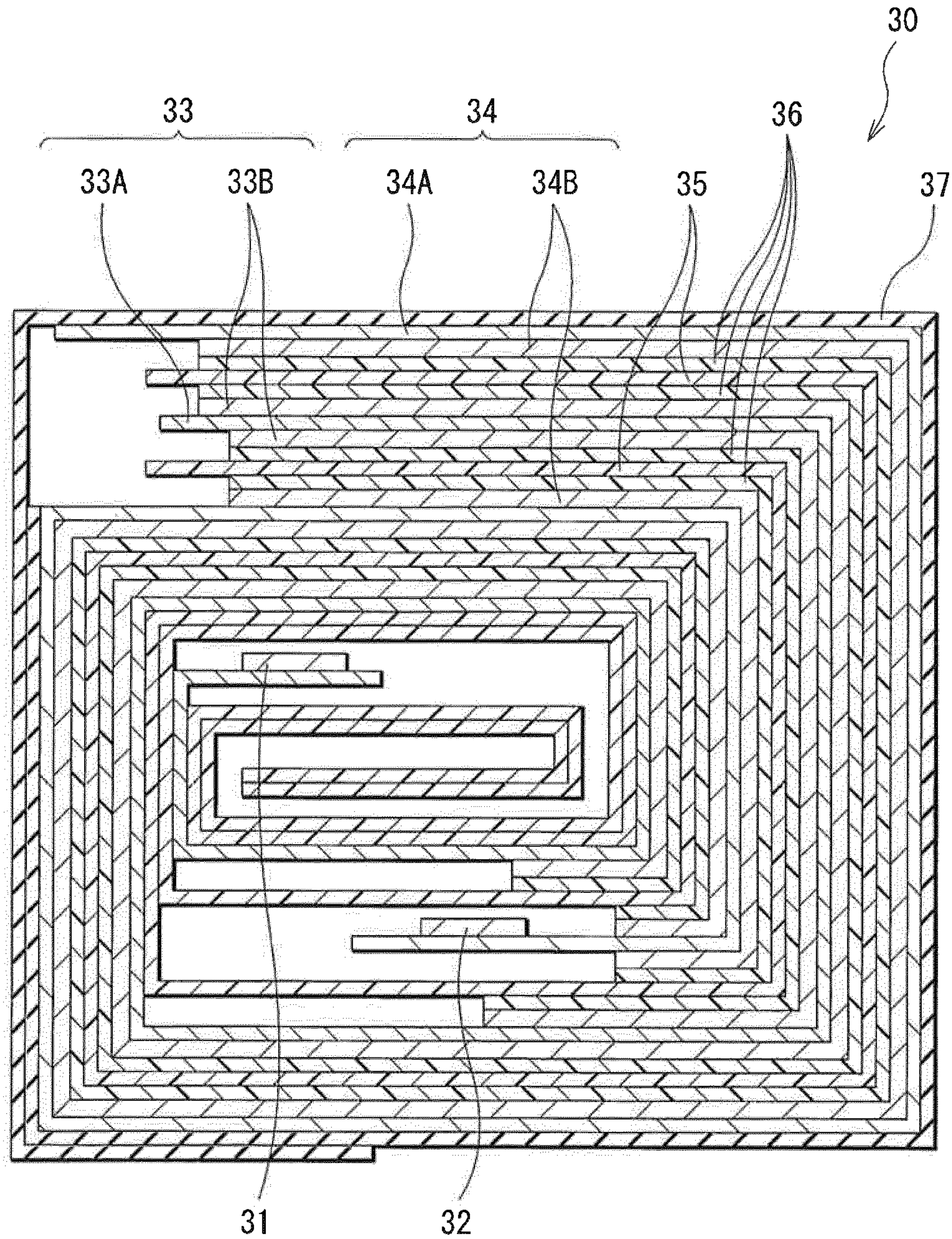

[ FIG. 5 ]

FIG. 5

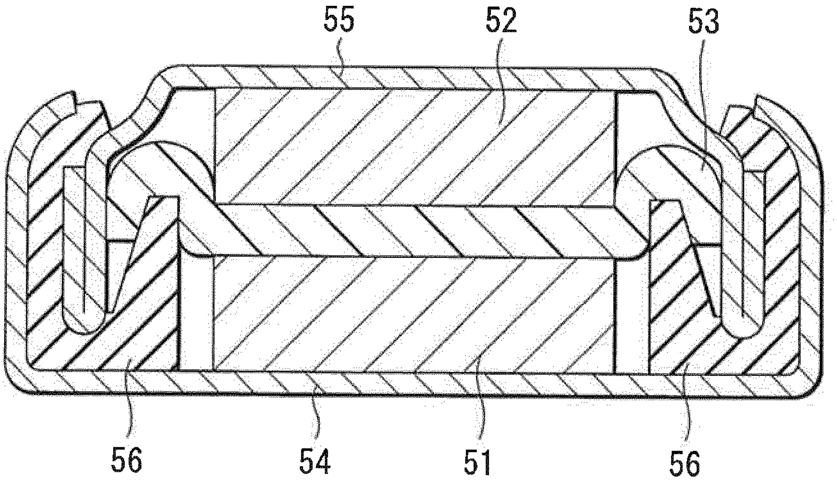

## INTERNATIONAL SEARCH REPORT

International application No. PCT/JP2018/017264

A. CLASSIFICATION OF SUBJECT MATTER
Int.Cl. H01M4/60(2006.01)i, H01M10/052(2010.01)i

According to International Patent Classification (IPC) or to both national classification and IPC

B. FIELDS SEARCHED

Minimum documentation searched (classification system followed by classification symbols)
Int.Cl. H01M4/60, H01M10/052

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | TABASSUM et al., "Synthesis of new heterometallic macromolecules:Their DNA binding, cleavage activity and in vitro model electrochemotherapy study", Spectrochimica Acta Part A, 2009, vol. 74, pp. 1152-1159 | 8 |
| A | JP 2014-139909 A (MITSUBISHI CHEMICAL CORP.) 31 July 2014, entire text & US 2014/0356708 A1 & EP 2816643 A1 & CN 104106163 A & KR 10-2014-0135696 A | 1-8 |

☒ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 June 2018 (28.06.2018) | 10 July 2018 (10.07.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/017264

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-112630 A (MATSUSHITA ELECTRIC INDUSTRIAL CO., LTD.) 15 May 2008, entire text (Family: none) | 1-8 |
| A | JP 2008-524778 A (NIPPON CHEMI-CON CORPORATION) 10 July 2008, entire text & US 2008/0300381 A1 & WO 2006/038292 A1 & EP 1807890 A1 | 1-8 |
| A | ERK, "Oligomeric cyclic esters from oxaalkanedicarboxy lie acids and oxaalkanediols, 3, Makromol. Chem.", Rapid Commun., 1984, vol. 5, pp. 275-279 | 1-8 |
| A | SANGEETHA et al., "Template Synthesis of Transition Metal Complexes with Octaamide Macrocyclic Ligand", Asian Journal of Chemistry, 2008, vol. 20, pp. 2673-2678 | 1-8 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2015118782 A